# EUROPÄISCHE PATENTANMELDUNG

(11) **EP 3 851 183 A1**
(43) Veröffentlichungstag der Anmeldung: **21.07.2021**
(21) Anmeldenummer: 20152436.0
(22) Anmeldetag: 17.01.2020
(51) Int. Cl.: B01D 67/00, B01D 69/02, B01D 69/10, B01D 69/12, B01D 69/14, B01D 63/10

(54) **VERBUNDKÖRPER UND DEREN VERWENDUNG IN DER ORGANOPHILEN NANOFILTRATION**

(71) Anmelder: Evonik Operations GmbH, 45128 Essen (DE)
(72) Erfinder: HYING, Christian, 46414 Rhede (DE); CONRADI, Oliver, 40545 Düsseldorf (DE); POPPE, Dirk, 45896 Gelsenkirchen (DE); GRZENIA, David, 45665 Recklinghausen (DE); KHALETSKAYA, Kira, 40476 Düsseldorf (DE)
(74) Vertreter: Evonik Patent Association

(57) **Zusammenfassung**

Gegenstand der vorliegenden Erfindung ist ein Verbundkörper, der auf einem porösen Substrat und in den Zwischenräumen des Substrats, welches Fasern, vorzugsweise aus einem elektrisch nicht leitendem Material, aufweist, eine poröse Schicht (1) aus miteinander und teilweise mit dem Substrat verbundenen Oxidpartikeln, die zumindest ein Oxid, ausgewählt aus Oxiden der Elemente Al, Zr, Ti und Si, bevorzugt ausgewählt aus Al₂O₃, ZrO₂, TiO₂ und SiO₂ aufweisen, aufweist, zumindest auf einer Seite eine weitere poröse Schicht (2) aufweist, die miteinander und teilweise mit der Schicht (1) verbundene Oxidpartikel, die zumindest ein Oxid, ausgewählt aus Oxiden der Elemente Al, Zr, Ti und Si, bevorzugt ausgewählt aus Al₂O₃, ZrO₂, TiO₂ und SiO₂ aufweisen, aufweist, wobei die in der Schicht (1) vorhandenen Oxidpartikel eine größere mittlere Partikelgröße aufweisen als die in der Schicht (2) vorhandenen Oxidpartikel, wobei die mittlere Partikelgröße (d₅₀) der Oxidpartikel in der Schicht (1) von 0,5 bis 4 µm beträgt und die mittlere Partikelgröße (dso) der Oxidpartikel in der Schicht (2) von 0,015 bis 0,15 µm, bevorzugt 0,04 bis 0,06 µm beträgt, welche dadurch gekennzeichnet ist, dass auf oder oberhalb der Schicht (2) eine Polymerbeschichtung (PB) vorhanden ist, die ein oder mehrere Polysiloxane enthält, ein Verfahren zur Herstellung von entsprechenden Verbundkörpern und deren Verwendung, insbesondere in der organophilen Nanofiltration.

## Beschreibung

Die vorliegende Erfindung betrifft einen Verbundkörper, der auf einem porösen Substrat und in den Zwischenräumen des Substrats, welches Fasern, vorzugsweise aus einem elektrisch nicht leitendem Material, aufweist, eine poröse Schicht (1) aus miteinander und teilweise mit dem Substrat verbundenen Oxidpartikeln, die zumindest ein Oxid, ausgewählt aus Oxiden der Elemente Al, Zr, Ti und Si, bevorzugt ausgewählt aus Al₂O₃, ZrO₂, TiO2 und SiO₂ aufweisen, aufweist, zumindest auf einer Seite eine weitere poröse Schicht (2) aufweist, die miteinander und teilweise mit der Schicht (1) verbundene Oxidpartikel, die zumindest ein Oxid, ausgewählt aus Oxiden der Elemente Al, Zr, Ti und Si, bevorzugt ausgewählt aus Al₂O3, ZrO₂, TiO₂ und SiO₂ aufweisen, aufweist, wobei die in der Schicht (1) vorhandenen Oxidpartikel eine größere mittlere Partikelgröße aufweisen als die in der Schicht (2) vorhandenen Oxidpartikel, wobei die mittlere Partikelgröße (d₅₀) der Oxidpartikel in der Schicht (1) von 0,5 bis 4 µm beträgt und die mittlere Partikelgröße (dso) der Oxidpartikel in der Schicht (2) von 0,015 bis 0,15 µm, bevorzugt 0,04 bis 0,06 µm beträgt, welche dadurch gekennzeichnet ist, dass auf oder oberhalb der Schicht (2) eine Polymerbeschichtung (PB) vorhanden ist, die ein oder mehrere Polysiloxane enthält, ein Verfahren zur Herstellung von entsprechenden Verbundkörpern und deren Verwendung, insbesondere in der organophilen Nanofiltration.

Seit einiger Zeit werden Membranen zur Trennung organischer Lösungen eingesetzt. Dabei werden gelöste Verunreinigungen, Katalysatoren oder Wertstoffe mit einem höheren Molekulargewicht als das Lösemittel von diesem Lösemittel abgetrennt.

Die Anwendungen sind auf Grund des Flusses von maximal nur 50 bis 150 L/m²h bei ca. 30 bar (3 MPa) (Toluol-Fluss, bestimmt wie in den Beispielen angegeben) der bisher einsetzbaren Membrane stark begrenzt. Eine deutliche Erhöhung dieses Flusses würde zu einer sehr viel breiteren Anwendung der Technik führen, da auch Anwendungen in der petrochemischen Industrie direkt möglich wären.

Die Erhöhung des Flusses wäre leicht durch die Durchführung der Nanofiltration bei höheren Temperaturen z.B. im Bereich von 120 bis 200 °C erreichbar. Allerdings stehen zurzeit keine Membranmaterialien zur Verfügung, die bei vertretbaren Herstellkosten eine ausreichend hohe Temperaturbeständigkeit zeigen.

So sind z. B. von der Evonik Resource Efficiency GmbH unter dem Handelsnamen PURAMEM® SELECTIVE, PURAMEM® PERFORMANCE und PURAMEM® FLUX Silikon-beschichtete PAN Membrane für die Nanofiltration bekannt, deren Anwendungsfenster bei 20 bis 40 bar (2 bis 4 MPa) und einer Maximaltemperatur von 50 °C liegt.

Verschiedene Ansätze, die Membrane aus temperaturbeständigen Polymeren zu fertigen, schlugen bislang fehl. Dies lag meist daran, dass die vorhandene poröse Stützstruktur bei erhöhtem Druck und erhöhter Temperatur komprimierten und somit keinen Fluss mehr durch die Membran zuließen, oder schlimmstenfalls versagten, wenn es zu einem Bruch oder Riss in der Membran kam.

Aus dem Bereich der Gastrennung sind Membrane bekannt, die Fluorpolymerbeschichtungen aufweisen. In WO 2007/149640 A2 hat die Firma Porogen vorgeschlagen, eine Fluorpolymer-Schicht auf einem porösen PEEK-Träger (PEEK-Folie) aufzubringen. Eine Herausforderung stellte dabei die Anbindung der Fluorpolymeren über funktionelle Gruppen an den Träger dar.

In DE 198 38 800 wird ein elektrischer Separator mit einer Verbundstruktur vorgeschlagen, der ein flächiges, mit einer Vielzahl von Öffnungen versehenes, flexibles Substrat mit einer darauf befindlichen Beschichtung umfasst. Das Material des Substrates ist ausgewählt aus Metallen, Legierungen, Kunststoffen, Glas und Kohlefaser oder einer Kombination solcher Materialien, und die Beschichtung ist eine flächig durchgehende, poröse, elektrisch nicht leitende keramische Beschichtung. Der Einsatz der keramischen Beschichtung verspricht thermische und chemische Beständigkeit.

Dass solche Verbundkörper mit Polymeren ausgerüstet werden können, beschreibt z. B. EP 1925047 A1. Die eingesetzten Polymere sollen dort aber im Wesentlichen sphärische Strukturen aufweisen und innerhalb des Verbundkörpers vorliegen.

Professor James Economy's Gruppe veröffentlichte einen Bericht über ein Forschungsvorhaben zur Herstellung von Dünnschichtkomposit-Membranen (TFC-Membranen), bei der eine selektive Schicht auf einen porösen Träger, wie z.B. eine Polysulfon- oder Keramik-Membran aufgebracht wird (http://economy.matse.illinois.edu/membrane.htm).

In DE 10139559 A1 werden Hybridmembranen beschrieben, bei denen keramische Membranen mit organischen Trennschichten ausgerüstet werden. Diese sollen eine bessere Langzeitstabilität als Membranen mit Trägern aus Polymeren aufweisen, haben aber eine ungleichmäßige Polymeroberfläche. In DE 10208278 A1 werden ähnliche Hybridmembranen beschrieben, bei denen die keramischen Membranen aber auf einem polymeren Trägermaterial, insbesondere Polymervlies basieren.

Mehrschichtige, im Wesentlichen keramische Verbundwerkstoffe sind auch bereits aus DE 10255121 A1 bekannt. Die dort beschriebenen Verbundwerkstoffe werden als Batterieseparatoren eingesetzt.

In der noch nicht veröffentlichten Anmeldung EP 19217879.6 werden Verbundköper beschrieben, die als Gastrennmembrane eingesetzt werden und die als trennaktive Polymerschicht eine Schicht basierend auf Fluor-haltigen Polymeren aufweist.

Aufgabe der vorliegenden Erfindung war die Bereitstellung eines Membranmaterials, welches einen oder mehrere Nachteile der aus dem Stand der Technik bekannter Membrane nicht aufweist.

Überraschenderweise wurde nun gefunden, dass durch Aufbringen einer Polymerbeschichtung, die Polysiloxan aufweist, auf einen Verbundkörper, der eine sehr glatte Oberfläche aufweist, Membrane erhalten werden können, die diese Aufgabe lösen.

Gegenstand der vorliegenden Erfindung sind deshalb Verbundkörper, ein Verfahren zur Herstellung von Verbundkörpern und die Verwendung dieser Verbundkörper wie in den Ansprüchen beansprucht und nachfolgend detailiert beschrieben.

Gegenstand der vorliegenden Erfindung ist insbesondere ein Verbundkörper, der auf einem porösen Substrat und in den Zwischenräumen des Substrats, welches Fasern, vorzugsweise aus einem elektrisch nicht leitendem Material, aufweist, eine poröse Schicht (1) aus miteinander und teilweise mit dem Substrat verbundenen Oxidpartikeln, die zumindest ein Oxid, ausgewählt aus Oxiden der Elemente Al, Zr, Ti und Si, bevorzugt ausgewählt aus Al₂O₃, ZrO₂, TiO2 und SiO₂ aufweisen, aufweist, zumindest auf einer Seite eine weitere poröse Schicht (2) aufweist, die miteinander und teilweise mit der Schicht (1) verbundene Oxidpartikel, die zumindest ein Oxid, ausgewählt aus Oxiden der Elemente Al, Zr, Ti und Si, bevorzugt ausgewählt aus Al₂O3, ZrO₂, TiO₂ und SiO₂ aufweisen, aufweist, wobei die in der Schicht (1) vorhandenen Oxidpartikel eine größere mittlere Partikelgröße aufweisen als die in der Schicht (2) vorhandenen Oxidpartikel, wobei die mittlere Partikelgröße (dso) der Oxidpartikel in der Schicht (1) von 0,5 bis 4 µm beträgt und die mittlere Partikelgröße (dso) der Oxidpartikel in der Schicht (2) von 0,015 bis 0,15 µm, bevorzugt 0,04 bis 0,06 µm beträgt, welche dadurch gekennzeichnet ist, dass auf oder oberhalb der Schicht (2) eine Polymerbeschichtung (PB) vorhanden ist, die ein oder mehrere Polysiloxane enthält, ein Verfahren zur Herstellung von entsprechenden Verbundkörpern und deren Verwendung, insbesondere in der organophilen Nanofiltration, sowie eine Trennvorrichtung enthaltend einen erfindungsgemäßen bzw. erfindungsgemäß hergestellten Verbundwerkstoff.

Die erfindungsgemäßen Verbundkörper haben den Vorteil, dass Sie eine sehr glatte und feinporige Oberfläche aufweisen, so dass trennaktive Polymerschichten bzw. -filme aufgebracht werden können, die an allen Stellen eine nahezu gleichmäßige Dicke aufweisen.

Weiterhin hat der erfindungsgemäße Verbundkörper den Vorteil, dass er so flexibel sein kann, vorzugsweise ist, dass er mit den üblichen Methoden zu Membranmodulen, insbesondere zu sog. Spiralwickelmodulen, weiterverarbeitet werden kann. Diese Membranmodule stellen die übliche Anwendungsform von Membranen dar. Es handelt sich hier um einfach handhabbare Aggregate, durch die die in ihnen verbaute Membran z.B. in Anlagen der Industrie eingebracht werden kann. Durch die gleichmäßige Dicke kann erreicht werden, dass die gesamte Oberfläche der trennaktiven Schicht (Polymerbeschichtung) keine Fehlstellen, wie z.B. Löcher, und an der Oberfläche eine homogene Durchlässigkeit, aufweist. Dies ist durch punktuelle Flussmessungen mit entsprechenden Gasen nachweisbar.

Der (Gas-)Fluss durch die erfindungsgemäße Membran kann bei größer 200 GPU vorzugsweise bei > 500 GPU für Kohlendioxid liegen. Dabei entspricht ein Fluss von einem GPU 0,0027 Nm³ / (m² h bar).

Durch die homogene Durchlässigkeit der Oberfläche der Membran wird vermieden, dass einige Regionen der Membran bevorzugt durchströmt werden und diese Bereiche besonders schnell von Fremdstoffen, die in nicht zu vernachlässigenden Konzentrationen enthalten sein können, beeinträchtigt werden, was zu einem schnellen Absinken der Trennleistung in den entsprechenden Teilbereichen der Membrane führen würde.

Durch die Größe der eingesetzten Oxidpartikel wird eine gleichmäßige Imprägnierung des Substrates erzielt, die sicherstellt, dass es nicht zu Hohlräumen und Lufteinschlüssen im Verbundkörper kommt. Dieses stellt sicher, dass der Verbundkörper bei Druckbeaufschlagung nicht kompaktiert und die Porenstruktur des Verbundkörpers nicht zerstört wird. Zudem kann durch die Größe der eingesetzten Oxidpartikel die Porenweite des Verbundkörpers eingestellt werden.

Durch die Verwendung der geeigneten Kombination von Fasern aufweisenden Substraten, insbesondere nicht gewebten Substraten, in Kombination mit den Oxidpartikeln kann eine Zugfestigkeit des erfindungsgemäßen Verbundkörpers von > 40 N/m in Maschinenrichtung erreicht werden.

Durch den erfindungsgemäßen Verbundwerkstoff und dessen Verwendung als Membran bei der organophilen Nanofiltration auch bei erhöhten Temperaturen können Stoffströme direkt behandelt werden die in den jeweiligen Herstellprozessen mit erhöhter Temperatur anfallen, so dass auf ein aufwändiges Abkühlen der zu behandelnden Stoffströme vor der organophilen Nanofiltration verzichtet werden kann.

Der erfindungsgemäße Verbundkörper, das erfindungsgemäße Verfahren zur Herstellung eines Verbundkörpers und die erfindungsgemäße Verwendung des Verbundkörpers werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere bezüglich der in Bezug genommenen Sachverhalte vollständig zum Offenbarungsgehalt der vorliegenden Erfindung gehören. Werden nachfolgend Angaben in Prozent gemacht, so handelt es sich, wenn nicht anders angegeben um Angaben in Gewichts-%. Werden nachfolgend Mittelwerte, z.B. Molmassen-Mittelwerte angegeben, so handelt es sich, wenn nicht anders angegeben um das Zahlenmittel. Werden nachfolgend Stoffeigenschaften, wie z. B. Viskositäten, Gasflüsse, Selektivitäten oder ähnliches angegeben, so handelt es sich, wenn nicht anders angegeben, um die Stoffeigenschaften bei 25 °C. Werden in der vorliegenden Erfindung chemische (Summen-)Formeln verwendet, so können die angegebenen Indizes sowohl absolute Zahlen als auch Mittelwerte darstellen. Bei polymeren Verbindungen stellen die Indizes vorzugsweise Mittelwerte dar.

Der erfindungsgemäße Verbundkörper, der auf einem porösen Substrat und in den Zwischenräumen des Substrats, welches Fasern aus einem elektrisch nicht leitendem Material, aufweist, eine poröse Schicht (1) aus miteinander und teilweise mit dem Substrat verbundenen Oxidpartikeln, die zumindest ein Oxid, ausgewählt aus Oxiden der Elemente Al, Zr, Ti und Si, bevorzugt ausgewählt aus Al₂O₃, ZrO₂, TiO₂ und SiO₂, besonders bevorzugt ausgewählt aus Al₂O₃ und SiO₂, aufweisen, aufweist, zumindest auf einer Seite eine weitere poröse Schicht (2) aufweist, die miteinander und teilweise mit der Schicht (1) verbundene Oxidpartikel, die zumindest ein Oxid, ausgewählt aus Oxiden der Elemente Al, Zr, Ti und Si, bevorzugt ausgewählt aus Al₂O₃, ZrO₂, TiO₂ und SiO₂, besonders bevorzugt ausgewählt aus Al₂O₃ und SiO₂, aufweisen, aufweist, wobei die in der Schicht (1) vorhandenen Oxidpartikel eine größere mittlere Partikelgröße aufweisen als die in der Schicht (2) vorhandenen Oxidpartikel, und die mittlere Partikelgröße (dso) der Oxidpartikel in der Schicht (1) von 0,5 bis 4 µm beträgt und die mittlere Partikelgröße (dso) der Oxidpartikel in der Schicht (2) von 0,015 bis 0,15 µm, bevorzugt 0,04 bis 0,06 µm beträgt, welche dadurch gekennzeichnet ist, dass auf oder oberhalb der Schicht (2) eine Polymerbeschichtung (PB) vorhanden ist, die ein oder mehrere Polysiloxane enthält. Unter Polysiloxane werden im Rahmen der vorliegenden Erfindung organisch modifizierte oder unmodifizierte Polysiloxane verstanden, die häufig auch als Silikone bezeichnet werden. Bevorzugte Polysiloxane bzw. Silikone sind solche, wie sie in WO 2011/067054 A1 beschrieben werden.

Die Bestimmung der mittleren Partikelgröße in den Schichten kann durch Anfertigen von rasterelektronenmikroskopischen Aufnahmen (z.B. mit Rasterelektronenmikroskop JEOL JSM IT300) und Durchführung einer Bildauswertung erfolgen. Alternativ kann die Partikelgröße der verwendeten Partikel, vor der Beschichtung und Verfestigung in der Dispersion, auch über geeignete Geräte zur Partikelgrößenmessung (Mastersizer Hydro 2000S, Malvern Panalytical, Malvern, UK)) mittels statischer Lichtstreuung, angelehnt an ISO 13320, bestimmt werden. Dieses Gerät misst die Größe von Partikeln mithilfe von Laserbeugung. Dazu muss der Brechungsindex der zu messenden Partikel bekannt sein und in der Software hinterlegt werden. Für die Messung der Partikelgrößenverteilung wird der zu messende Feststoff mittels Rühren bei 1750 U/min und bei Bedarf unter Hinzunahme von Ultraschall in VE-Wasser dispergiert. Von der dispergierten Probe wird ein so großes Aliquot in das Dispergiermodul des Messgerätes pipettiert, dass die Laserverdunklung zwischen 15 und 20 % liegt. Mit dem Mastersizer Hydro 2000S wird die Intensität des von der Probe gestreuten Lichts zweier Laserstrahlen (Wellenlänge 633 nm und 466 nm) gemessen. Die Auswertung der räumlichen Verteilung der Streuintensitäten erfolgt mittels der Mie-Theorie. Hieraus werden die Partikelgröße und die Partikelgrößenverteilung ermittelt. Die Messergebnisse werden als Verteilungskurve angegeben, somit erhält man nicht nur eine Aussage über die mittlere Partikelgröße sondern auch Informationen über die kleinsten und über die größten Partikel in der Probe. Der dso gibt dabei die mittlere Partikelgröße an. Als dso wird in diesem Zusammenhang der Durchmesser bezeichnet bei dem 50% der volumengewichteten Größenverteilung kleiner als dieser Durchmesser sind. Weitere Parameter sind demzufolge der d₁₀, als Maß für die kleinsten Partikel, sowie d₉₀, für die größeren Partikel in der Probe. Je enger d₁₀ und d₉₀ zusammenliegen, desto enger ist die Partikelgrößenverteilung.

Besonders bevorzugt sind die Oxidpartikel, die ein Oxid ausgewählt aus Al₂O₃ und SiO₂ aufweisen oder daraus bestehen. Ganz besonders bevorzugte Oxidpartikel mit einer mittleren Partikelgröße (dso) von 0,015 bis 0,15 µm, bevorzugt 0,04 bis 0,06 µm sind solche, die auf SiO₂ basieren oder daraus bestehen. Beispiele für besonders bevorzugte Oxidpartikel sind pyrogene Oxidpartikel, wie sie unter dem Markennamen Aerosil® oder Aeroxide® von Evonik Resource Efficiency angeboten werden oder vergleichbare Produkte anderer Anbieter.

Der erfindungsgemäße Verbundkörper weist ohne das Vorhandensein der Polymerbeschichtung vorzugsweise eine Gurley-Zahl von 200 bis 1700 sec, bevorzugt 250 bis 1200 sec und besonders bevorzugt von 300 bis 800 sec auf. Die Bestimmung der Gurley-Zahl kann z.B. vor dem Aufbringen der Polymerbeschichtung erfolgen.

Die Gurley-Zahl ist ein Maß für die Luftdurchlässigkeit eines porösen Werkstoffs. Sie ist definiert als die Zeit in Sekunden, die benötigt wird, damit 100 cm3 Luft unter definierten Bedingungen durch einen inch² einer Probe zu diffundieren. Zur Bestimmung werden mit einem Lochhenkeleisen kreisrunde Proben mit Durchmesser 44 mm ausgestanzt. Auf dem Lichttisch wird die zu untersuchende Probe auf Fehler evtl. Löcher begutachtet. Nur optisch einwandfreie Proben sind für die Messung geeignet. Vor Beginn der Messung ist zu prüfen, dass am Messgerät (Densometer Modell Nr. 411ON, Gurley Precision Instruments, Troy, NY) die Libelle justiert und der äußere Zylinder bis zur Füllmarke mit Densometer-Öl der Fa. Gurley Precicions Instruments gefüllt ist. Der Densometer-Prüfvorgang besteht in der Messung der Zeit, die notwendig ist zum Durchfluten einer bestimmten Luftmenge durch eine bestimmte Probenfläche unter einheitlichem leichten Druck. Die Druckluft wird durch einen Innenzylinder von genauem Durchmesser und mit Standardgewicht erzeugt und fließt frei in einen Außenzylinder, der teilweise mit Öl gefüllt ist, welches zur Luftabdichtung dient.

Der erfindungsgemäße Verbundkörper weist vorzugsweise eine Dicke von 100 bis 400 µm, bevorzugt 125 bis 200 µm und besonders bevorzugt von 130 bis 170 µm auf. Die Dickenbestimmung erfolgte mit einer Messbügelschraube der Fa. Mitutoyo (Digimetic Micrometer MDC-25PX, 0-25µm).

Der erfindungsgemäße Verbundkörper weist vorzugsweise eine mittlere Porenweite von 60 bis 140 , bevorzugt 75 bis 130 nm, auf. Die Bestimmung der mittleren Porenweite erfolgt mittels Gasfluss Porometrie wie nachfolgend beschrieben mit einem Porolux 1000 (Porometer, Eke, Belgien).

Dazu wird aus dem zu analysierenden Material eine kreisrunde Probe mit Durchmesser 25 mm ausgestanzt, bei 100 °C für 1 Stunde im Trockenschrank getrocknet um Feuchtigkeit aus den Poren zu entfernen, und anschließend unverzüglich in der Benetzungsflüssigkeit Porefil eingelegt, damit sämtliche vorhandenen Poren mit dieser Flüssigkeit gefüllt sind. Anschließend wird die Probe durch kurzzeitiges Anlegen von Vakuum (150 mbar bzw. 15 kPa) im Exsikkator entgast, um sicherzustellen, dass alle Poren mit Porefil gefüllt sind. Die entgaste Probe wird in den Probenhalter des Messgerätes eingelegt und der Probenhalter verschraubt.

Die Bestimmung der Porenradienverteilung beruht auf dem Messprinzip der Kapillarfluss-Porometrie. Die mit der Benetzungsflüssigkeit getränkte und entgaste Probe wird in der Messzelle mit einem schrittweise ansteigendem Inertgas-Druck (Stickstoff) beaufschlagt und die dem anliegenden Druck entsprechenden Porendurchmesser werden durch den Gasdruck entleert. Dabei wird die Flussrate des Gases bei ansteigenden Drücken aufgenommen. In den durchgängigen Poren findet ein Austausch der Benetzungsflüssigkeit mit Stickstoff statt. Dies erfolgt solange, bis der relevante Porenbereich erfasst wurde, d.h. bis auch die kleinsten im Messbereich vorhandenen Poren von Flüssigkeit befreit sind. Anschließend wird der Druck in der Messzelle wieder abgesenkt und die Messung an der nun trockenen Probe wiederholt. Aus der Differenz der Nasskurve und der Trockenkurve wird die Porengrößenverteilung berechnet. Die Porometrie-Messungen führen zur Kenntnis der größten vorhandenen Porenradien (sogenannter "bubble point"), sowie den häufigsten und den kleinsten Porendurchmessern.

Der erfindungsgemäße Verbundkörper weist auf der Oberfläche der Schicht (2) eine Oberflächenrauhigkeit Sdq, bestimmt wie nachfolgend beschrieben, von bevorzugt kleiner 10 µm, besonders bevorzugt von kleiner als 8 µm auf.

Die Bestimmung der Oberflächenrauhigkeit erfolgt bezogen auf eine Messfläche von 2 cm ∗ 2 cm, gemessen mittels Konfokalmikroskopie (http://ak-rauheit.de/fites/3D%20Kenngr%F6%DFen.pdf). Die Bestimmung kann beispielsweise mit einem konfokalen Mikroskop µsurf expert der Fa. Nanofocus, Oberhausen, erfolgen. Dazu wird ein Objektiv des Typs 800xs genutzt und ein Scan von 3 x 3 Bildern angefertigt. Die Auswertung erfolgt durch Verwendung der Auswertesoftware µsoft analysis premium 7.4.8164 anhand der ungefilterten Oberfläche gemäß der DIN ISO 25178. Die Rdq - Werte werden gem. DIN ISO 4287 ermittelt.

Bevorzugte erfindungsgemäße Verbundkörper sind solche, die eine Gurley-Zahl von 200 bis 1700 sec, bevorzugt 250 bis 1200 sec und besonders bevorzugt von 300 bis 800 sec, eine Dicke von 100 bis 400 µm, bevorzugt 125 bis 200 µm und besonders bevorzugt von 130 bis 170 µm, eine mittlere Porenweite (vorzugsweise der äußersten Schicht) von 60 bis 140 , bevorzugt 75 bis 130 nm, und/oder, vorzugsweise und eine Oberflächenrauhigkeit Sdq, von kleiner 10 µm, besonders bevorzugt von weniger als 8 µm aufweisen, wobei solche Verbundkörper besonders bevorzugt sind die, die alle der jeweils bevorzugtesten Parameter aufweisen.

In dem erfindungsgemäßen Verbundkörper ist das Substrat vorzugsweise ein Vlies, Gewirke oder Gelege, bevorzugt ein Vlies oder Gelege, besonders bevorzugt ein Vlies. Die Fasern weisen vorzugsweise eine Dimension von 1 bis 200 g/km Faser auf. Bevorzugt sind die Fasern aus Polyacrylnitril, Polyamid, Polyester und/oder Polyolefin, bevorzugt aus Polyacrylnitril. Besonders bevorzugt weisen die Fasern eine Dimension von 10 bis 80 g/km Faser und ganz besonders bevorzugt weisen die Fasern eine Dimension von 50 g/km Faser auf und sind aus Polyacrylnitril, Polyamid, Polyester und/oder Polyolefin, bevorzugt aus Polyester, insbesondere Polyethylentherephthalat.

Das Substrat weist vorzugsweise eine Dicke von 50 bis 150 µm, bevorzugt 100 bis 130 µm auf. Bevorzugt weist das Substrat ein Flächengewicht von 40 bis 150 g/m², bevorzugt 50 bis 120 g/m², bevorzugt 50 bis 100 g/m² und ganz besonders bevorzugt 60 g/m² aufweist. Besonders bevorzugt weist das Substrat eine Dicke von 50 bis 150 µm, bevorzugt von 100 bis 130 µm und ein Flächengewicht von 40 bis 150 g/m², bevorzugt 50 bis 120 g/m², bevorzugt 50 bis 100 g/m² und ganz besonders bevorzugt 60 g/m² auf.

Besonders bevorzugte Substrate sind solche, die alle der genannten Parameter aufweisen, ganz besonders bevorzugt solche, die jeweils die bevorzugtesten der genannten Parameter aufweisen.

Als Polymerbeschichtungen, die Polysiloxan aufweisen, sind insbesondere solche geeignet, die eine hohe intrinsische Gaspermeabilität von >200 barrer (cm³ unter Normbedingungen/cm*sec*cmHg) für CO₂ aufweisen. Bevorzugte Polysiloxane bzw. Silikone sind z. B. Polydimethylsilikon, Polyethylmethylsilikon, Nitrilsilikon, Polytrimethylsilylpropene oder auch entsprechende Copolymere. Die Polymerbeschichtung (PB) weist vorzugsweise eine Dicke von 0,05 µm bis 10 µm, bevorzugt von 3 µm bis 8 µm, auf.

Zur schnellen Charakterisierung der Verbundkörper mit Polymerbeschichtung wurden diese durch eine einfache und schnelle Messung der Reingasselektivitäten und Flüsse beschrieben. Dazu wurden Probestücke der Membrane mit einem Durchmesser von 40 mm in eine Messzelle für Flachmembranen eingebracht. Auf der Hochdruckseite wurde die Membrane dann schrittweise mit dem entsprechenden Gas (zunächst Methan, danach Kohlendioxid) beaufschlagt. Die Messung erfolgte bei Transmembrandrücken zwischen 2 und 25 bar (0,2 und 2,6 MPa). Über Massendurchflussmesser der Fa. Bronkhorst wurden die permeierten Gasmengen quantifiziert.

Die erhaltenen Daten wurden über die geometrischen Daten der Membranmesszellen normiert und zueinander ins Verhältnis gesetzt. Aus dem Verhältnis der permeierten Gasmengen verschiedener Gase bei gleichem Transmembrandruck wird die Reingasselektivität berechnet. Diese sollte für defektfreie Membranen für Kohlendioxid zu Methan größer 2,7 sein. Durch entsprechende Normierung der einzelnen Kohlendioxid Flüsse durch die Membrane kann leicht eine mittlere Permeabilität berechnet werden, die für defektfreie ausreichend dünne Polymerbeschichtung, welche nach dem hier beschriebenen Verfahren hergestellt wurden, bei > 500 GPU liegen (immer verbunden mit einer Reingasselektivität von > 2,7).

Der erfindungsgemäße Verbundkörper weist vorzugsweise einen Toluol-Fluss bei 130 °C und 30 bar (3,0 MPa)Transmembrandruck, bestimmt wie in den Beispielen angegeben, von größer 130 L/m²h, bevorzugt größer 250 L/m²h, besonders bevorzugt größer 300 L/m²h und ganz besonders bevorzugt größer 400 L/m²h auf.

Die erfindungsgemäßen Verbundkörper zeichnen sich durch eine gute Stabilität bei der Handhabung aus. Dies reduziert die Wahrscheinlichkeit des Auftretens von Fehlern/Beschädigungen im Verbundkörper, die z. B. während des Einbringens in eine Apparatur zur Trennung von Gasgemischen auftreten können. Typische Fehler/Beschädigungen wären Brüche in der Keramik aufgrund von Knicken oder der Behandlung mit spitzen Gegenständen.

Die erfindungsgemäßen Verbundkörper weisen vorzugsweise keine Schicht oder Beschichtung auf, die Fluor-haltige Polymere aufweist.

Die erfindungsgemäßen Verbundkörper sind vorzugsweise flexibel. Flexibel bedeutet im Rahmen der vorliegenden Erfindung, dass sie ohne Beschädigung um einen Stab oder um ein Rohr mit einem Durchmesser von bis herab zu 15 mm gewickelt werden können. Besonders bevorzugte erfindungsgemäße Verbundkörper können um einen Stab oder um ein Rohr mit einem minimalen Durchmesser von bis herab zu 5 mm ohne Beschädigung gewickelt werden. Die Beschädigungsfreiheit der entsprechenden Verbundkörper kann leicht durch die Bestimmung des Gasflusses von Stickstoff nachgewiesen werden. Hierbei wird eine Erhöhung des Gasflusses bestimmt mit Stickstoff um mehr als 100 % als Fehler/Beschädigung im Verbundkörper gewertet. Durch die Flexibilität der erfindungsgemäßen Verbundkörper sind diese sehr einfach in typischen Modulformen für Flachmembranen einbringbar und eignen sich insbesondere zur Verwendung in Spiral-Wickel-Modulen, Plate oder Frame Modulen, Taschenmodulen und andere Apparaturen, die für Flachmembranen entworfen wurden.

Durch die teilweise keramische Struktur der erfindungsgemäßen Verbundkörper haben diese außerdem den Vorteil, dass sich bei einer Druckbeaufschlagung ihre Dicke und/oder Porosität vorzugsweise wenig, bevorzugt nahezu gar nicht, verändert. Dies hat den Vorteil, dass der gesamte Verbundkörper auch bei hoher Druckbeaufschlagung eine nahezu konstante Flussleistung in GPU zulässt und der Fluss nicht bei höheren Drücken durch eine sich verdichtende poröse Struktur reduziert wird. Zur Bestimmung der Änderungen von Dicke und/oder Porosität kann eine kreisrunde Probe mit einem Durchmesser von 35 mm aus einem erfindungsgemäßen Verbundkörper ausgeschnitten und in einer hydraulischen Presse unter gleichzeitiger Bestimmung der Dicke mit einem Druck von bis zu 52 bar (5,2 MPa) beaufschlagt werden (Messgerät der Firma INSTRON). Aus einem Diagramm in dem die Dicke als Funktion des Pressendrucks aufgetragen ist, kann nach drei Zyklen aus Druckbeaufschlagung und Entspannung ein elastischer Teil der Dickenänderung errechnet werden. Dieser liegt für erfindungsgemäße Verbundkörper vorzugsweise bei kleiner 8 %, bevorzugt kleiner 7 %.

Die erfindungsgemäßen Verbundkörper können auf unterschiedliche Weise hergestellt werden, vorzugsweise werden die erfindungsgemäßen Verbundkörper durch das nachfolgend beschriebene erfindungsgemäße Verfahren erhalten.

Das erfindungsgemäße Verfahren zur Herstellung eines Verbundkörpers, bevorzugt eines erfindungsgemäßen Verbundkörpers zeichnet sich dadurch aus, dass es die folgenden Schritte aufweist:
(a) Aufbringen einer Beschichtungsmasse (BM1) auf und in ein Substrat, welches Fasern und Zwischenräume zwischen den Fasern aufweist, wobei die Beschichtungsmasse hergestellt wird durch Vereinen
(a1) einer Dispersion (D1) von Oxidpartikeln, hergestellt durch Mischen von Oxidpartikeln, ausgewählt aus den Oxiden der Elemente Ti, Al, Zr und/oder Si, bevorzugt ausgewählt aus Al₂O₃, ZrO₂, TiO2 und SiO₂, besonders bevorzugt ausgewählt aus den Oxiden der Elemente Al und Si, die einen mittleren Partikeldurchmesser (d50) von 0,5 bis 4 µm aufweisen, mit Wasser, einer anorganischen Säure, vorzugsweise Salpetersäure, und einem Dispergierhilfsmittel,
(a2) einer Dispersion (D2) von Oxidpartikeln, hergestellt durch Mischen von Oxidpartikeln, ausgewählt aus den Oxiden der Elemente Ti, Al, Zr und/oder Si, bevorzugt ausgewählt aus den Oxiden der Elemente Al und Si, die einen mittleren Partikeldurchmesser (d50) von 15 bis 150 nm, vorzugsweise 40 bis 60 nm aufweisen, mit Wasser,
(a3) einer Binderformulierung (BF1), hergestellt durch Mischen von mindestens zwei organofunktionellen Silanen mit einem Alkanol, vorzugsweise Ethanol, einer anorganischen Säure, vorzugsweise Borsäure, und Wasser,
(b) Verfestigen der Beschichtungsmasse (BM1) bei einer Temperatur von 100 °C bis 275 °C, vorzugsweise 120 bis 240 °C, um eine erste Schicht (S1') zu schaffen,
(c) optional Aufbringen einer Beschichtungsmasse (BM2) auf mindestens die Schicht (S1'), wobei die Beschichtungsmasse (BM2) hergestellt wird durch Vereinen
(c1) einer Dispersion (D3) von Oxidpartikeln, hergestellt durch Mischen von Oxidpartikeln, ausgewählt aus den Oxiden der Elemente Ti, Al, Zr und/oder Si, bevorzugt ausgewählt aus Al₂O₃, ZrO₂, TiO2 und SiO₂, besonders bevorzugt ausgewählt aus den Oxiden der Elemente Al und Si, die einen mittleren Partikeldurchmesser (d50) von 0,5 bis 4 µm aufweisen, mit Wasser, einer anorganischen Säure, vorzugsweise Salpetersäure, und einem Dispergierhilfsmittel,
(c2) einer Dispersion (D4) von Oxidpartikeln, hergestellt durch Mischen von Oxidpartikeln, ausgewählt aus den Oxiden der Elemente Ti, Al, Zr und/oder Si, bevorzugt ausgewählt aus Al₂O₃, ZrO₂, TiO2 und SiO₂, besonders bevorzugt ausgewählt aus den Oxiden der Elemente Al und Si, die einen mittleren Partikeldurchmesser (d50) von 15 bis 150 nm, bevorzugt 40 bis 60 nm aufweisen, mit Wasser,
(c3) einer Binderformulierung (BF2), hergestellt durch Mischen von mindestens zwei organofunktionellen Silanen mit einem Alkanol, vorzugsweise Ethanol, einer anorganischen Säure, vorzugsweise Borsäure, und Wasser,
(d) optional Verfestigen der Beschichtungsmasse (BM2) bei einer Temperatur von 100 °C bis 275 °C, vorzugsweise 120 bis 240 °C, um eine zweite Schicht (S2') zu schaffen,
(e) Aufbringen einer Beschichtungsmasse (BM3) auf die Schicht (S1') oder, falls vorhanden, die Schicht (S2'), wobei die Beschichtungsmasse (BM3) hergestellt wurde durch Vereinigen von Wasser und einer anorganischen Säure mit einer
(e1) Oxidpartikel, ausgewählt aus den Oxiden der Elemente Ti, Al, Zr und/oder Si, bevorzugt ausgewählt aus Al₂O₃, ZrO₂, TiO2 und SiO₂, besonders bevorzugt ausgewählt aus den Oxiden der Elemente Al und Si, die einen mittleren Partikeldurchmesser (d50) von 25 bis 100 nm, bevorzugt 40 bis 60 nm, aufweisen, aufweisenden wässrigen Dispersion (D5), sowie mit Ethanol und mit einer (e2) Binderformulierung (BF3), die mindestens zwei organofunktionelle Silane umfasst,
(f) Verfestigen der Beschichtungsmasse bei einer Temperatur von 100 °C bis 275 °C, vorzugsweise 120 bis 240 °C um eine Schicht (S3') zu schaffen,
(g) optional Aufbringen einer Beschichtungsmasse (BM4) auf die Schicht (S3'), wobei die Beschichtungsmasse (BM4) hergestellt wurde durch Vereinigen von Wasser und einer anorganischen Säure mit einer
(g1) Oxidpartikel, ausgewählt aus den Oxiden der Elemente Ti, Al, Zr und/oder Si, bevorzugt ausgewählt aus den Oxiden der Elemente Al und Si, die einen mittleren Partikeldurchmesser von 15 bis 150 nm, bevorzugt 40 bis 60 nm aufweisen, aufweisenden wässrigen Dispersion (D6), sowie mit Ethanol und mit einer
(g2) Binderformulierung (BF4), die mindestens zwei organofunktionelle Silane umfasst,
(h) optional Verfestigen der Beschichtungsmasse bei einer Temperatur von 100 °C bis 275 °C, vorzugsweise 120 bis 240 °C, um eine Schicht (S4') zu erhalten,
(i) Aufbringen einer Polymerbeschichtung, die Polysiloxane enthält, auf die Schicht (S3') oder, falls vorhanden, auf die Schicht (S4').

Unter Polysiloxane werden organisch modifizierte oder unmodifizierte Polysiloxane verstanden, die häufig auch als Silikone bezeichnet werden.

Die erfindungsgemäßen Verbundkörper weisen vorzugsweise keinen Schritt auf, bei dem eine Schicht oder Beschichtung aufgebracht wird, die Fluor-haltige Polymere aufweist.

Ganz besonders bevorzugt eingesetzte Oxidpartikel mit einem mittleren Partikeldurchmesser (d₅₀) von 15 bis 150 nm, bevorzugt 40 bis 60 nm basieren auf SiO₂ oder daraus bestehen. Entsprechende Partikel sind z.B. unter der Bezeichnung Aerosil® Ox50 bei der Evonik Resource Efficiency GmbH erhältlich.

Bei der Herstellung der Binderformulierungen BF1 bis BF2 wird vorzugsweise so viel Säure eingesetzt, dass der pH-Wert von 2 bis 5 beträgt. Bei der Herstellung der Beschichtungsmassen BM1 bis BM4 wird vorzugsweise so viel an Säure eingesetzt, dass der pH-Wert von 2,5 bis 5 beträgt. Wird zur Herstellung der Binderformulierung AMEO eingesetzt, beträgt der pH-Wert vorzugsweise größer 8, bevorzugt 8,5 bis 9,5. Insbesondere bei der Verwendung von AMEO in der Binderformulierung kann es vorteilhaft sein, einzelne Teilschritte der Herstellung der Binderformulierung so zusammenzufassen, dass die Einsatzstoffe der Binderformulierung ohne Zwischenschritte direkt in die Beschichtungsmasse eindosiert werden. Diese Vorgehensweise ist aber auch bei allen anderen Beschichtungsmassenformulierungen anwendbar.

Als Dispergierhilfsmittel können alle geeigneten Dispergierhilfsmittel eingesetzt werden. Vorzugsweise werden Dispergierhilfsmittel eingesetzt, die unter dem Namen DOLAPIX von der Zschimmer & Schwarz GmbH & Co KG oder die unter dem Namen TEGO® Dispers von der Evonik Resource Efficiency GmbH vertrieben werden. Besonders bevorzugt wird als Dispergierhilfsmittel eine Carbonsäurezubereitung eingesetzt, wie sie z. B. unter der Bezeichnung DOLAPIX CE 64 von der Zschimmer & Schwarz GmbH & Co KG vertrieben wird.

Es kann vorteilhaft sein und kann deshalb bevorzugt sein, in dem erfindungsgemäßen Verfahren die optionalen Schritte (c) und (d) und/oder (g) und (h) durchzuführen, da auf diese Weise einfacher und sicherer Verbundkörper erhalten werden können, die eine geringe Oberflächenrauhigkeit, bevorzugt eine Oberflächenrauhigkeit Sdq, von kleiner 10 µm, besonders bevorzugt von kleiner 8 µm aufweisen. Besonders bevorzugt werden deshalb sowohl die Schritte (c) und (d) als auch die Schritte (g) und (h) durchgeführt. Auf diese Weise kann außerdem sichergestellt werden, dass Fehlstellen im Verbundkörper, also Stellen an denen z.B. die mittlere Porenweite, die Gurleyzahl, die Dicke und/oder die Oberflächenrauhigkeit deutlich von den beanspruchten bzw. als bevorzugt beschriebenen Werten abweicht, vermieden werden.

Als organofunktionelle Silane, vorzugsweise alkoxyfunktionelle Silane, besonders bevorzugt methoxy- und/oder ethoxyfunktionelle Silane, werden vorzugsweise 3-Glycidyloxytriethoxysilan, Methytriethoxysilan, Octyltriethoxysilan, Aminopropyltrieethoxysilan und/oder Tetraethoxysilane eingesetzt. Bevorzugt werden als organofunktionelle Silane 3-Glycidyloxytriethoxysilan, Methytriethoxysilan und Tetraethoxysilan eingesetzt. In Binderformulierung (BF1) und/oder (BF2), vorzugsweise und (BF2), wird 3-Glycidyloxytriethoxysilan, Methytriethoxysilan und Tetraethoxysilan in einem Massenverhältnis von 2 bis 4 zu 0,5 bis 1,5 zu 1, besonders bevorzugt von 2,5 bis 3,5 zu 0,75 bis 1,25 zu 1, ganz besonders bevorzugt 3 zu 1 zu 1 eingesetzt. In Binderformulierung (BF3) und/oder (BF4), vorzugsweise und (BF4), wird 3-Glycidyloxytriethoxysilan, Methytriethoxysilan und Tetraethoxysilan in einem Massenverhältnis von 0,5 bis 1,5 zu 1,5 bis 2,5 zu 1, besonders bevorzugt von 0,75 bis 1,25 zu 1,75 bis 2,25 zu 1, ganz besonders bevorzugt 1 zu 2 zu 1 eingesetzt.

Es kann vorteilhaft sein, wenn die Beschichtungsmassen (BM3) und (BM4) identisch zusammengesetzt sind. Es kann ebenfalls vorteilhaft sein, wenn die Beschichtungsmassen (BM1) und (BM2) identisch zusammengesetzt sind. Auf diese Weise können einheitlich aufgebaute Schichten (1) bzw. (2) durch Herstellen der Schichten (S1') und (S2') bzw. (S3') und (S4') erhalten werden. Auch dies kann dazu beitragen, die Anzahl von Fehlstellen im Verbundkörper zu vermeiden.

Als Substrat wird in dem erfindungsgemäßen Verfahren vorzugsweise ein Polymervlies eingesetzt, das Fasern ausgewählt aus Polyacrylnitril, Polyester, Polyamid und/oder Polyolefin, bevorzugt aus Polyester, besonders bevorzugt Polyethylentherephthalat aufweist. Bevorzugt eingesetzte Substrate weisen vorzugsweise die oben genannten Parameter, insbesondere die dort als bevorzugt genannten Parameter auf.

Das Verfestigen der Beschichtungsmassen kann z.B. durch Durchlaufen eines Heißluft-Ofens, eines IR-Ofens oder eines sonstigen Ofens erfolgen. Bevorzugt erfolgt das Verfestigen der Beschichtungsmassen BM1 bis BM4 bei einer Temperatur von 100 bis 275 °C, besonders bevorzugt bei einer Temperatur von 120 bis 240 °C.

Die Polymerbeschichtung kann z.B. aber auch dadurch hergestellt werden, dass eine Lösung des Silikonpolymers auf die Schicht (S3') oder falls vorhanden (S4') und/oder auf die Polymerschicht aufgebracht wird. Die Lösung weist vorzugsweise 3 bis 10 Gew.-% des Polymers auf. Als Lösemittel eignen sich im Falle der Nutzung von Silikonen insbesondere Siloxanverbindungen, bevorzugt Hexamethyldisiloxan, aber auch Toluol oder iso-Octan sind nutzbar. Wird Silikon als Polymer eingesetzt, werden bevorzugt Mehrkomponenten-Systeme genutzt, die z.B. von Momentive, Panacol oder Evonik Hanse Chemie GmbH bezogen werden können. So kann z. B, das Silikon RTV-615 der Firma Momentive eingesetzt werden.

Eine typische Formulierung von additionsvernetzenden Silikonen der Evonik Hanse GmbH, besteht aus Lösung A und Lösung B in variabler Zusammensetzung, die je nach Anforderungen im Verhältnis 1:10 bis 10:1 zusammengegeben werden können. Dabei enthält Lösung A einen Platinkatalysator (Platin-Siloxankomplex), und kann weiterhin variable Mengenanteile von vinylfunktionellem Polydimethylsiloxan mit gewünschtem Molekulargewicht und gewünschtem Gehalt an Vinylgruppen, vinylfunktionellem QM-Harz in gewünschtem Molekulargewicht und Silica-Partikeln enthalten. Lösung B enthält SiH-haltiges Polydimethylsiloxan (Crosslinker) mit gewünschtem Molekulargewicht und gewünschtem Gehalt an SiH-Gruppen sowie 0,02 Gew.-% eines Inhibitors (z.B. Alkinole, Divinyltetramethyldisiloxan, Methylvinylcyclotetrasiloxan), und kann weiterhin variable Mengenanteile von vinylfunktionellem Polydimethylsiloxan mit gewünschtem Molekulargewicht und gewünschtem Gehalt an Vinylgruppen, vinylfunktionellem QM-Harz in gewünschtem Molekulargewicht und Silica-Partikeln enthalten.

Die Silikonformulierung, kann auch ein feuchtigkeitsvernetzendes Silikonsystem sein. Gut geeignete Polymerformulierungen enthalten vorzugsweise 3 bis 7 Gew.-% vernetzbares Silikon in für das jeweilige Silikon geeigneten Lösemitteln.

Das Trocknen der Beschichtung, die Polysiloxan enthält oder daraus besteht, erfolgt vorzugsweise für 1 bis 30 Minuten bei 50 bis 150 °C.

Bei der Herstellung der Lösung der Polysiloxane werden die Polymere und die Lösungskonzentration, aber auch die Zeit zur Mischung der Polymerkomponenten im Lösemittel, vorzugsweise so ausgewählt, dass die Mischung nur geringfügig und bevorzugt gar nicht in die Porenstruktur des Verbundkörpers eindringt. Dies kann der Fachmann durch einfache Vorversuche ermitteln.

Es kann vorteilhaft sein, vor dem jeweiligen Aufbringen einer Polymerbeschichtung die Schicht/Struktur, auf welche die Beschichtung aufgebracht werden soll, mit einem Plasma, vorzugsweise einer Corona (Luftplasma) zu behandeln. Dabei wird vorzugsweise eine Leistung von 50 bis 900, bevorzugt 100 bis 300 W min/m² bei der Behandlung der Beschichtung, die gummiartige Polymere aufweist, bevorzugt 300 bis 900 W min/m² bei der Behandlung der keramischen (also Oxidpartikel enthaltenen) Schichten, eingestellt. Geeignete Geräte zur Corona Behandlung sind von der Fa. Softal, Hamburg erhältlich.

Das Verfahren zur Herstellung der erfindungsgemäßen Verbundkörper kann kontinuierlich oder diskontinuierlich durchgeführt werden. Vorzugsweise wird das Verfahren als Rolle zu Rolle Verfahren durchgeführt. Dabei werden vorzugsweise alle Schritte (a) bis (i) sowie ggf. die entsprechenden Unterschritte so durchgeführt, dass das Substrat oder das ein- oder mehrfach beschichtete Substrat von einer Rolle abgewickelt und durch eine Apparatur geführt wird, in der ein oder mehrere Schritte bzw. Unterschritte durchgeführt werden und nach dem Verfestigen der aufgebrachten Schicht(en) das ein oder mehrfach beschichtete Substrat bzw. der erfindungsgemäße Verbundkörper aufgerollt wird. Es kann vorteilhaft sein, wenn beim Aufrollen des Verbundkörpers eine Zwischenlage mit eingerollt wird, die ein Verkleben oder Beschädigen der Schicht (S1') bis (S4') bzw. einer ggf. vorhandenen Polymerschicht verhindert. Als Zwischenlage eignen sich z.B. Polyethylentherephthalat-Vliese, z.B. solche wie sie auch als Substrat verwendet werden. Wird das erfindungsgemäße Verfahren als Rolle zu Rolle Verfahren durchgeführt, beträgt die Bahngeschwindigkeit vorzugsweise von 1 bis 500 mm/sec., bevorzugt 20 bis 50 mm/sec.

Mittels des erfindungsgemäßen Verfahrens können die erfindungsgemäßen Verbundkörper erhalten werden. Dem entsprechend sind Trennvorrichtungen ebenfalls Gegenstand der vorliegenden Erfindung, die einen erfindungsgemäßen Verbundkörper oder erfindungsgemäß hergestellten Verbundkörper enthalten.

Der erfindungsgemäße Verbundwerkstoff oder ein erfindungsgemäß hergestellter Verbundwerkstoff können z.B. in der organophilen Nanofiltration, bevorzugt als organophile Nanofiltrationsmembran, besonders bevorzugt zur Abtrennung von organischen Verbindungen aus organische Lösemittel haltigen Stoffströmen verwendet werden. Dabei werden vorzugsweise 95 % der Moleküle mit einem Molekulargewicht größer 800 g/mol von der Membran zurückgehalten und dadurch vom Lösemittel abgetrennt, welches vorzugsweise eine Molekulargewicht von kleiner 250 g/mol, bevorzugt kleiner 150 g/mol und besonders bevorzugt kleiner 120 g/mol aufweist. Beispiel für solche Lösungsmittel sind z. B. Tetrahydrofuran, Hexan, Heptan, Mesitylen, Isopropanol, Toluol, Dichlormethan, Aceton und Essigsäureethylester.

Die organophile Nanofiltration bzw. die Abtrennung kann bei Temperaturen von größer 100 °C, bevorzugt größer 120 °C und besonders bevorzugt größer 150 °C durchgeführt werden. Es kann vorteilhaft sein, wenn die Temperatur 300 °C, bevorzugt 250 °C und ganz besonders bevorzugt 200 °C nicht übersteigt. Insbesondere können durch den Einsatz der erfindungsgemäßen Verbundwerkstoffe oder erfindungsgemäß hergestellten Verbundwerkstoffe als Membrane bzw. durch Einsatz erfindungsgemäßer Trennvorrichtungen Stoffströme direkt behandelt werden, die vorzugsweise Temperaturen in den genannten Bereichen, also von größer 100 °C bis 300 °C, bevorzugt von größer 120 °C bis 250 °C und besonders bevorzugt von größer 150 °C bis 200 °C aufweisen.

Die vorliegende Erfindung wird durch die Figuren Fig. 1 bis Fig. 4 näher erläutert. In Fig. 1 bedeutet TF Toluol-Fluss und Fig. 2 und Fig. 3 bedeuten RH Rückhalt, jeweils bestimmt wie in Beispiel 5 angegeben. In Fig. 4 wird der prinzipielle Aufbau der zur Bestimmung von Toluolfluss und Rückhalt eingesetzten Querstromfiltrationsapparatur dargestellt. Dargestellt ist die Verschaltung Vorlagenbehälter VB, Membranzellen 1 und 2 (MZ1, MZ2), Feedpumpe FP, Permeatpumpe PP und Permeatbehältern 1 und 2 (PB1 und PB2).

Die vorliegende Erfindung wird durch die nachfolgenden Beispiele beschrieben, ohne darauf beschränkt zu sein.

### Beispiele

**Tabelle 1a: Eingesetzte Rohstoffe**

| **Rohstoff** | **ggf. Markenname, Hersteller (in Klammern nachfolgend verwendete Abkürzung)** |
|---|---|
| Ethanol | |
| VE-Wasser | |
| Dispergiermittel | DOLAPIX® CE 64, Zschimmer & Schwarz GmbH & Co. KG (CE 64) |
| Borsäure | |
| Salpetersäure (65 Gew.-%ig) | (HNO₃) |
| 3-Glycidyloxytrimethoxysilan | DYNASYLAN® GLYMO, Evonik Resource Efficiency GmbH (GLYMO) |
| 3-Glycidyloxytriethoxysilan | DYNASYLAN® GLYEO, Evonik Resource Efficiency GmbH (GLYEO) |
| Methytriethoxysilan | DYNASYLAN® MTES, Evonik Resource Efficiency GmbH (MTES) |
| Tetraethoxysilan | DYNASYLAN® TEOS, Evonik Resource Efficiency GmbH (TEOS) |
| Aluminiumoxid | CT1200 SG, Almatis GmbH |
| Aluminiumoxid | CT 3000 SG, Almatis GmbH |
| Siliziumdioxid | AEROSIL® Ox 50, Evonik Resource Efficiency GmbH (Ox50) |
| Siliciumdioxid | AEROSIL® 90, Evonik Resource Efficiency GmbH |
| Siliciumdioxid | AEROSIL® 200, Evonik Resource Efficiency GmbH |
| Titandioxid | AEROXIDE® TiO2 P 25, Evonik Resource Efficiency GmbH (P25) |
| Zirkonoxid, | Zirkonoxid 50nm, Sigma Aldrich |
| Kieselsol | LEVASIL® CS40-316P, Obermeier GmbH |
| Aluminiumoxid | MARTOXID® MZS-1, Martinswerk GmbH (MZS-1) |
| Aluminiumoxid | MARTOXID® MZS-3, Martinswerk GmbH (MZS-3) |
| Aluminiumoxid | AEROXIDE® Alu C, Evonik Resource Efficiency GmbH (Alu C) |
| Harzmischung | VinylQM-Harzmischung VQM906; Evonik Hanse Chemie GmbH |
| Katalysator | Katalysator 511, Evonik Hanse Chemie GmbH |
| vinylfunktionelles Polydimethylsiloxan | VS 165.000; Evonik Hanse Chemie GmbH |
| SiH-haltiges Polydimethylsiloxan | Crosslinker-120; Evonik Hanse Chemie GmbH |
| Methylbutinol | Aldrich |
| 2-komponentiges Polymersilikon | RTV-615 (A+B), Momentive |

**Tabelle 1b: Eingesetzte Substrat-Materialien:**

| Substrat | Formgebung | Material | Flächengewicht | Lieferant |
|---|---|---|---|---|
| 1 | Vlies 05-TH-60W | PET | 60 g/sqm | Sojitz, Düsseldorf |
| 2 | Vlies | Carbon | 15 g/sqm | Technical Fibre Products, Burnside Mills |
| 3 | Gewebe | E-Glas | 60 g/sqm | P&G |
| 4 | Monofilament-Gewebe | PET | 40 g/sqm | SEFAR |

### Beispiel 1: Herstellung eines erfindungsgemäßen Verbundwerkstoffs

### Beispiel 1a: Herstellung Binder-Formulierung I

In einem 250 mL Becherglas wurden zunächst 14,22 g Ethanol mit 2,84 g Borsäure vorgelegt und mit einem Magnetrührer miteinander verrührt. Sobald sich die Borsäure weitgehend aufgelöst hatte, konnten nacheinander 18,16 g GLYEO (entspricht 15,5 g GLYMO), 5,14 g TEOS und 5,14 g MTES zugegeben werden. (Für wechselnde Versuchsbeschreibungen müsste dieser Teil jeweils variiert werden.) Nachdem dieses gut miteinander vermischt vorlag, wurde eine Menge von 0,03 g Wasser zum Start der Hydrolyse zugegeben. Das Gemisch wurde 15 h lang auf einem Magnetrührer gerührt, bevor ein zweiter Wasseranteil von 7,1 g unter Rühren hinzugefügt wurde. Die so vorbereitete Silan-Binder-Formulierung wurde weitere 5 h bis zum Abklingen der "Vorhydrolyse" gerührt, bevor sie verwendet wurde.

### Beispiel 1b: Herstellung Partikel-Formulierung I

11 kg Wasser wurden in einen Hobbock gegeben. Unter Schwenken wurden 5 kg Ox50 zugegeben. Dieses Gemisch wurde für 1 h langsam gerührt. Um die Partikel weiter zu zerkleinern, wurde die Mischung für eine Dauer von 6 Stunden in einer Menge von 12 L/h durch eine Durchflussultraschallzelle UIP 1000 geleitet. Die Partikelgröße d₅₀ wurde wie in der Beschreibung angegeben zu < 60nm bestimmt. Der Feststoffgehalt betrug ca. 30 Massen-%.

### Beispiel 1c: Herstellung Beschichtungsmasse I

In ein 1000 mL Becherglas wurden nacheinander 97 g Wasser, 0,44g Dolapix CE64 und 1,84 g einer 65 Massen-%igen Salpetersäure Lösung gegeben und mit einem Magnetrührer miteinander vermischt. Zu dieser Mischung wurden portionsweise 200 g eines feinteiligen Aluminiumoxids (ct1200SG) unter ständigem Rühren gegeben.

Nachdem alle Komponenten eingewogen und gut miteinander vermischt vorlagen, wurde diese Dispersion mit einem Ultraschall-Dispergierfinger (Hielscher UP200) behandelt, um eventuell vorliegende Agglomerate zu zerstören. Zu dieser Dispersion wurden noch 42 g Ethanol gegeben, anschließend wurde dieses Gemisch mindestens für weitere 15 h gerührt. Nach Ablauf der 15 h wurden entweder 13,5 g einer 30 %igen OX50 Dispersion, hergestellt gemäß Beispiel 1b und 8,74 g Wasser, oder 4 g Aerosil Ox50 mit 18 g Wasser zugegeben. Anschließend wurden 52,6 g einer vorbereiteten Silan-Binder-Formulierung hinzugefügt und die gesamte Dispersion wurde erneut für mindestens 15 h rührend gealtert.

Die resultierende Beschichtungsmasse hat einen Feststoffgehalt von 58,7 % und kann in dieser Form für Beschichtungsversuche genutzt werden.

### Beispiel 1d: Herstellung Binder-Formulierung II

In einem 250 mL Becherglas wurden zunächst 10,45 g Ethanol mit 0,84 g Borsäure vorgelegt und mit einem Magnetrührer miteinander verrührt. Sobald sich die Borsäure weitgehend aufgelöst hatte, konnten nacheinander 5,89 g GLYEO, 5,0 g TEOS und 10 g MTES zugegeben werden. (Für wechselnde Versuchsbeschreibungen müsste dieser Teil jeweils variiert werden.) Nachdem dieses gut miteinander vermischt vorlag, wurde eine Menge von 0,03 g Wasser zum Start der Hydrolyse zugegeben. Das Gemisch wurde 1 h lang auf einem Magnetrührer gerührt, bevor weitere 5,19 g VE-Wasser unter Rühren hinzugefügt wurde. Die so vorbereitete Silan-Binder-Formulierung **II** wurde weitere 15 h gerührt, bevor sie verwendet wurde.

### Beispiel 1e: Herstellung Beschichtungsmasse II

In ein 1000 mL Becherglas wurden 101,35 g der Ox50-Disperion aus Beispiel 1b vorgelegt und dann nacheinander 299,88 g VE-Wasser und 3 g einer 65 Massen-%igen Salpetersäure Lösung zugegeben und mit einem Magnetrührer 15 Stunden gerührt.

Zu dieser Dispersion wurden 37,39 g der vorbereiteten (Silan-)Binder-Formulierung II sowie 150,4 g Ethanol zugegeben. Anschließend wurde dieses Gemisch für weitere 2 Tage gerührt.

Die resultierende Beschichtungsmasse II hat einen Feststoffgehalt an Ox50 von ca. 5,7 % und kann in dieser Form für die Beschichtungsversuche genutzt werden.

### Beispiel 1f: Beschichtungsprozess

Es wurde ein Streifen des zu beschichtenden Materials (Gewebes, Vlieses oder Gestrickes) mit 10 cm Breite und mit ca. 1 m Länge vorbereitet. Alternativ kann auch das Ergebnis einer Beschichtung, wie sie hier beschrieben wird, verwendet werden. In diesem Fall ist dann aber darauf zu achten, dass vorzugsweise immer die gleiche Seite in nachfolgenden Behandlungsschritten bearbeitet wird.

Eine automatisierte Filmziehvorrichtung der Fa. Zehntner wurde so modifiziert, dass diese mit einem Seilzugmechanismus die zu beschichtenden Bahnwaren mit einer vorgegebenen Geschwindigkeit von 42 mm/s senkrecht aus einer DipCoat Vorrichtung, in der eine Seite der Warenbahn über eine Walze umgelenkt wird und somit nicht mit der Beschichtungsdispersion in Kontakt kommt und die andere Seite der Warenbahn durch eine mit der Dispersion gefüllte Wanne gefördert wird, nach oben gezogen wird.

Zur Beschichtung wird die fertig gemischte Dispersion (Beschichtungsmasse I oder II) in eine Wanne gegeben, in der eine mit der Warenbahn umspannte Rolle läuft. Der Füllstand der Wanne wurde so eingestellt, dass die Rolle nur mit 45 ° ihres Umfangs in die Lösung eintaucht. Zur guten Führung der Warenbahn, und um ein Hinterlaufen der Warenbahn durch die Dispersion zu verhindern, betrug die Bahnspannung mehr als 0,1 N/cm Warenbahnbreite. Die Warenbahn wird mit einer Geschwindigkeit von 42 mm/s bei Raumtemperatur und Normaldruck durch die Dispersion geführt.

Nach Abschluss der Beschichtung verblieb die Warenbahn noch 30 Minuten an einem gut gelüfteten Ort in senkrecht hängender Form und wurde erst danach in einem Trockenschrank auf einem Gitterrost liegend, bei 120 °C eine Stunde lang getrocknet und verfestigt.

Die getrocknete Warenbahn wird entweder erneut beschichtet oder der fertige Verbundkörper kann anschließend durch Schneiden oder Stanzen für die jeweiligen Test oder Verwendungen zugeschnitten werden.

Zur Herstellung des erfindungsgemäßen Verbundwerkstoffs wurde nacheinander zweimal mit einer Beschichtungsmasse I und zweimal mit einer Beschichtungsmasse II beschichtet. Die in einem Beispiel verwendeten Beschichtungsmassen I bzw. II konnten gleich oder unterschiedlich sein. Zur Ermittlung der am besten geeigneten Einsatzstoffe (Substrat, Beschichtungsmasse, Partikelformulierung, Binderformulierung etc.) wurde in Vorversuchen gegebenenfalls auch nur ein- oder mehrmals nur mit der Beschichtungsmasse I beschichtet. In den entsprechenden Tabellen ist die Anzahl der Beschichtungsvorgänge jeweils angegeben.

Die Versuche gemäß Beispiel 1 wurden analog unter Verwendung unterschiedlicher Partikel-Formulierungen, unterschiedlichen Beschichtungsmassen I bzw. II, unterschiedlichen Binder-Mischungen I bzw. II und unterschiedlichen Prozessparameter durchgeführt. Den Tabellen 2a bis 2I können die eingesetzten Rohstoffe und Mengen bzw. die jeweils eingesetzten Prozessparameter entnommen werden.

**Tabelle 2a: Für die Herstellung der Binder-Formulierung I (BF-I) eingesetzte Rohstoffe und Mengen sowie variierte Verfahrensparameter**

| BF-I | Ethanol [g] | Borsäure [g] | MTES [g] | TEOS [g] | GLYEO [g] | Wasser [g] | Summe [g] |
|---|---|---|---|---|---|---|---|
| BF-I-a | 14,22 | 2,84 | 5,14 | 5,14 | 18,16 | 0,03 | 52,6 |
| | | | | | | 7,1 | |
| BF-I-b | 14,22 | 2,84 | 10,28 | 5,14 | 6,01 | 0,03 | 45,6 |
| | | | | | | 7,1 | |

**Tabelle 2b: Für die Herstellung der Partikel-Formulierungen (PF) in den jeweiligen Beispielen eingesetzte Rohstoffe und Mengen**

| PF | Partikel-Typ | Wasser [g] | Dolapix CE64 [g] | HN03 (65%) [g] | Partikel [g] | Ethanol [g] | PF-0 [g] | Wasser [g] | Summe [g] |
|---|---|---|---|---|---|---|---|---|---|
| PF-0 | Ox50 | 11.000 | | | 5.000 | | | | 16.000 |
| PF-I-a | CT 1200 SG | 96,8 | 0,44 | 1,84 | 200 | 41,4 | 13,62 | 8,74 | 362,8 |
| PF-I-b | CT 3000 SG | 96,8 | 0,44 | 1,84 | 200 | 41,4 | 13,62 | 8,74 | 362,8 |
| PF-I-c | MZS-1 | 193,6 | 0,88 | 3,68 | 400 | 82,8 | 27,24 | 17.48 | 725,6 |
| PF-I-d | MZS-3 | 193,6 | 0,88 | 3,68 | 400 | 82,8 | 27,24 | 17.48 | 725,6 |
| PF-I-e | MZS-1 | 193,6 | 0,88 | 3,68 | 200 | 82,8 | 27,24 | 17.48 | 725,6 |
| | MZS-3 | | | | 200 | | | | |

**Tabelle 2c: Für die Herstellung der Beschichtungsmasse I (BM-I) in den jeweiligen Beispielen eingesetzte Rohstoffe und Mengen**

| BM-I | PF-I | Einwaage PF-I [g] | BF-I | Einwaage BF-I [g] |
|---|---|---|---|---|
| BM-I-a | PF-I-a | 362,8 | BF-I-a | 52,6 |
| BM-I-b | PF-I-a | 362,8 | BF-I-b | 45,6 |
| BM-I-c | PF-I-b | 362,8 | BF-I-a | 52,9 |
| BM-I-d | PF-I-c | 725,6 | BF-I-a | 105,3 |
| BM-I-e | PF-I-d | 725,6 | BF-I-a | 105,3 |
| BM-I-f | PF-I-e | 725,6 | BF-I-a | 105,3 |

**Tabelle 2d: Für die Herstellung der Partikel-Formulierungen II (PF-II) in den jeweiligen Beispielen eingesetzte Rohstoffe und Mengen**

| PF-II | Partikeltyp | Wasser [g] | PF-0 [g] | HNO3 (65%) [g] | Partikel [g] | Summe [g] |
|---|---|---|---|---|---|---|
| PF-0 | Ox 50 | 11.000 | | | 5.000 | 16.000 |
| PF-II-a | Ox 50 | 299,9 | 101,4 | 3 | | 403 |
| PF-II-b | Alu C | 371,2 | | 3 | 30 | 404 |
| PF-II-c | Aerosil 90 | 371,2 | | 3 | 30 | 404 |
| PF-II-d | Aerosil 200 | 371,2 | | 3 | 30 | 404 |
| PF-II-e | P25 | 371,2 | | 3 | 30 | 404 |
| PF-II-f | Zirkonoxid | 371,2 | | 3 | 30 | 404 |
| PF-II-g | Levasil 30 | 301,2 | | 3 | 100 | 404 |

**Tabelle 2e: Für die Herstellung der Binder-Formulierung II (BF-II) in den jeweiligen Beispielen eingesetzte Rohstoffe und Mengen und ggf. variierte Parameter**

| BF-II | Ethanol [g] | Borsäure [g] | MTES [g] | TEOS [g] | GLYEO [g] | Wasser [g] | Summe [g] |
|---|---|---|---|---|---|---|---|
| BF-II-a | 10,45 | 0,84 | 10 | 5 | 5,89 | 5,22 | 37,4 |
| BF-II-b | 2,75 | 0,22 | 1 | 1 | 3,5 | 1,37 | 9,8 |
| BF-II-c | 5,5 | 0,44 | 2 | 2 | 7 | 2,74 | 16,7 |
| BF-II-d | 14,22 | 2,84 | 5,14 | 5,14 | 18,16 | 7,1 | 52,6 |
| BF-II-e | 11 | 0,88 | 4 | 4 | 14 | 5,48 | 39,4 |
| BF-II-f | 8,25 | 0,66 | 3 | 3 | 10,5 | 4,11 | 29,5 |
| BF-II-g | 16,5 | 1,32 | 6 | 6 | 21,1 | 8,22 | 59,1 |
| BF-II-h | 21,98 | 1,76 | 8 | 8 | 28,1 | 10,95 | 78,8 |
| BF-II-i | 10,3 | 0,83 | 8 | 8 | 4,7 | 5,13 | 37,0 |
| BF-II-k | 10,6 | 0,85 | 6,7 | 6,7 | 7,8 | 5,3 | 37,9 |
| BF-II-I | 10,8 | 0,87 | 5 | 5 | 11,7 | 5,4 | 38,8 |
| BF-II-m | 11,0 | 0,89 | 3,3 | 3,3 | 15,6 | 5,5 | 39,6 |
| BF-II-n | 10,4 | 0,84 | 10 | 5 | 5,9 | 5,2 | 37,3 |
| BF-II-o | 10,0 | 0,8 | 6,7 | 6,7 | 6,7 (AMEO) | 5,0 | 35,8 |
| BF-II-p | 10 | 0,8 | 5 (AMEO) | 5 | 10 (IBTEO) | 5,0 | 35,8 |
| BF-II-q | 10 | 0,8 | 12 | 4 | 4,7 | 5,1 | 37,0 |

**Tabelle 2f: Für die Herstellung der Beschichtungsmasse II (BM-II) bzw. Beschichtungsmasse III (BM-III) in den jeweiligen Beispielen eingesetzte Rohstoffe und Mengen**

| BM-II | PF-II | Einwaage PF-II [g] | BF-II | Einwaage BF-II [g] | Einwaage Ethanol [g] |
|---|---|---|---|---|---|
| BM-II-a | PF-II-a | 404 | BF-II-a | 37,4 | 150 |
| BM-II-b | PF-II-a | 404 | BF-II-b | 9,8 | 150 |
| BM-II-c | PF-II-a | 404 | BF-II-c | 16,7 | 150 |
| BM-II-d | PF-II-a | 404 | BF-II-n | 37,3 | 150 |
| BM-II-e | PF-II-a | 404 | BF-II-e | 39,4 | 150 |
| BM-II-f | PF-II-a | 404 | BF-II-f | 29,5 | 150 |
| BM-II-g | PF-II-a | 404 | BF-II-g | 59,1 | 150 |
| BM-II-h | PF-II-a | 404 | BF-II-h | 78,8 | 150 |
| BM-II-i | PF-II-e | 404 | BF-II-e | 39,4 | 150 |
| BM-II-k | PF-II-f | 404 | BF-II-e | 39,4 | 150 |
| BM-II-I | PF-II-g | 404 | BF-II-e | 39,4 | 150 |
| BM-II-m | PF-II-a | 404 | BF-II-i | 39,4 | 150 |
| BM-II-n | PF-II-a | 404 | BF-II-k | 37,9 | 150 |
| BM-II-o | PF-II-a | 404 | BF-II-I | 38,8 | 150 |
| BM-II-p | PF-II-a | 404 | BF-II-m | 39,6 | 150 |
| BM-II-q | PF-II-b | 404 | BF-II-n | 37,3 | 150 |
| BM-II-r | PF-II-a | 404 | BF-II-i | 37,0 | 150 |
| BM-II-s | PF-II-a | 404 | BF-II-k | 37,9 | 150 |
| BM-II-t | PF-II-b | 404 | BF-II-e | 39,4 | 150 |
| BM-II-u | PF-II-c | 404 | BF-II-e | 39,4 | 150 |
| BM-II-v | PF-II-d | 404 | BF-II-e | 39,4 | 150 |
| BM-II-w | PF-II-a | 404 | BF-II-q | 37,0 | 150 |
| BM-II-x | PF-II-a | 404 | BF-II-n | 37,3 | 150 |
| BM-III-a | PF-II-a | 404 | BF-II-o | 35,0 | 150 |
| BM-III-b | PF-II-a | 404 | BF-II-p | 35,0 | 150 |

**Tabelle 2g: Versuche zur Prüfung der Eignung von Substraten**

| Verbund körper | Substrat | BM | Auftragsvorgänge |
|---|---|---|---|
| A | 1 | BM-I-a | 2 |
| B | 2 | BM-I-a | 2 |
| C | 3 | BM-I-a | 2 |
| D | 4 | BM-I-a | 2 |

**Tabelle 2h: Versuche zur Prüfung der Eignung von Beschichtungsmassen I**

| Verbundkörper | Support | BM | Auftragsvorgänge |
|---|---|---|---|
| E | 1 | BM-I-a | 2 |
| F | 1 | BM-I-b | 2 |
| G | 1 | BM-I-c | 2 |
| H | 1 | BM-I-d | 2 |
| I | 1 | BM-I-e | 2 |
| J | 1 | BM-I-f | 2 |

**Tabelle 2i: Versuche zur Festlegung des Verhältnisses von Binder zu Partikeln in der Beschichtungsmasse II**

| Verbundkörper | Support | BM | Auftragsvorgänge |
|---|---|---|---|
| K | Verbundkörper A | BM-II-b | 2 |
| L | Verbundkörper A | BM-II-c | 2 |
| N | Verbundkörper A | BM-II-e | 2 |
| O | Verbundkörper A | BM-II-f | 2 |
| P | Verbundkörper A | BM-II-g | 2 |
| Q | Verbundkörper A | BM-II-h | 2 |

**Tabelle 2j: Versuche zur Festlegung der einzusetzenden Partikel in der Beschichtungsmasse II**

| Verbundkörper | Support | BM | Auftragsvorgänge |
|---|---|---|---|
| R | Verbundkörper A | BM-II-e | 2 |
| S | Verbundkörper A | BM-II-t | 2 |
| T | Verbundkörper A | BM-II-u | 2 |
| U | Verbundkörper A | BM-II-v | 2 |
| V | Verbundkörper A | BM-II-i | 2 |
| W | Verbundkörper A | BM-II-k | 2 |
| X | Verbundkörper A | BM-II-I | 2 |

**Tabelle 2k: Versuche zur Festlegung der in der Beschichtungsmasse II einzusetzenden Binderformulierung**

| Verbundkörper | Support | BM | Auftragsvorgänge |
|---|---|---|---|
| 2A | Verbundkörper A | BM-II-e | 2 |
| 2B | Verbundkörper A | BM-II-m | 2 |
| 2C | Verbundkörper A | BM-II-n | 2 |
| 2D | Verbundkörper A | BM-II-o | 2 |
| 2E | Verbundkörper A | BM-II-p | 2 |
| 2F | Verbundkörper A | BM-II-q | 2 |
| 2G | Verbundkörper A | BM-II-w | 2 |
| 2H | Verbundkörper A | BM-II-x | 2 |

**Tabelle 2l: Versuche zur Festlegung der in der Beschichtungsmasse II einzusetzenden Binderformulierung (Eintopf-Verfahren)**

| | | | |
|---|---|---|---|
| 2I | Verbundkörper A | BM-III-a | 2 |
| 2K | Verbundkörper A | BM-III-b | 2 |

### Beispiel 2: Charakterisierung der Verbundkörper

Die in den Beispielen hergestellten Verbundkörper wurden wie nachfolgend beschrieben charakterisiert. Die Ergebnisse sind in Tabelle 3 zusammengestellt.

Die Bestimmung der Rauhigkeiten Rdq min., Rdq max. und SDQ erfolgte wie oben detailliert beschrieben.

### Verbundkörper A bis D:

Alle Proben besitzen einzelne Bereiche die eine geringe Rauheit zeigen (Rdq min). Allerdings konnte den erstellten Bildern entnommen werden, dass die Monofilament-gewebe strukturbedingt regelmäßig Höhen und Tiefen aufweisen. Daher scheidet dieses Material bei der weiteren Betrachtung aus.

Zur Realisierung möglichst glatter Oberflächen, muss bereits die erste keramische Schicht möglichst homogen sein. Substrat-Materialien wie "Monofilament-Gewebe" erscheinen deshalb weniger geeignet.

Glasfasergewebe wären sehr gut geeignet, aber diese neigen zur Rissbildung in der Keramikschicht, weil die Fäden (Zwischenräume zwischen den Einzelfasern) schlecht durchtränkt werden.

"Nassgelegte" Vliese wie auch Papiere zeichnen sich durch recht glatte Strukturen aus (ohne herausstehende Fasern) und sind daher als Support gut geeignet. Allerdings sind bei Verwendung dicker Einzelfasern die Zwischenräume zwischen den Fasern genau zu beachten, da diese möglichst vollständig gefüllt (geschlossen) werden müssen. Schlecht geeignet sind Spinnvliese und Meltblownvliese, ebenso "trocken gelegte Nadelvliese. Besonders geeignete Substrate sind deshalb PET-Vlies und Carbon-Faser-Vlies.

Zudem muss ein mehrschichtiger Aufbau gewählt werden, da eine einzelne Beschichtung allein keine ausreichend glatte Oberfläche bietet. Die erste Schicht dient vor allem dem Füllen der Faserzwischenräume. Danach müssen die Schichten glatter werden, gleichzeitig ist eine Verkleinerung der Porenradien durch Verwendung kleinerer Partikel anzustreben.

### Verbundkörper E bis J:

Eine Doppelbeschichtung mit den verschiedenen Partikeln, zeigt, dass ct1200SG und MZS1 am besten geeignet sind. Bei diesen sind die Faserzwischenräume am besten gefüllt, wodurch sich eine relativ ebene Oberfläche ergibt. Feinere und auch größere Partikel führen zu schlechterer Füllung der Faserzwischenräume (ct 3000 SG bzw. MZS3).

Mit einer Mischung aus MZS1 und MZS3 erhält man auch relativ gute Oberflächenqualitäten, allerdings verbunden mit einem größeren mittleren Porenradius. Da als resultierende Membranoberfläche ein Material mit Poren von weniger als 100 nm Größe bereitgestellt werden soll, wurde im Weiteren vor allem mit ct1200SG weitergearbeitet (wobei MZS1 genauso gut geeignet wäre).

### Verbundkörper K bis Q:

Bei Auftragung weiterer Schichten von feinen Ox50 Partikel auf die ct1200SG-Oberfläche wird die mittlere Porenweite reduziert und die Oberflächengüte verbessert, es wurden Variationen der Zusammensetzung von Partikelanteil zu Silan-Binder-Anteil durchgeführt.

Sehr geringe Binder-Anteile führen zu einer eher unebeneren Oberfläche als höhere Binderanteile. Wobei einer Erhöhung auf den doppelten Gehalt bereits wieder zu einer Verschlechterung des Sdq-Wertes führt. Das Optimum liegt bei einem Mischungsverhältnis von Aerosil OX50 / Silan-Binder von 50:50 (g/g) bis hin zu 65:35(g/g).

### Verbundkörper R bis X:

Bei Vergleich der verschiedenen verwendeten Partikel fällt zum einen auf, das Silanbinder mit Siliziumdioxid-Partikeln recht gute glatte Oberflächen ergeben. Aufgrund der Partikelstruktur sind aber Aerosil 90 und Aerosil 200 (aggregierte Primärpartikel) genauso wie das Aluminiumoxid Alu C weniger geeignet. Ox-50 hat abgestimmt auf die Poren der zu beschichtenden Unterstruktur die geeignetsten Partikel (Partikelgröße).

Titandioxid P25 ist bei den gewählten Bedingungen nur schlecht mit dem Bindersystem stabilisierbar und bildet daher sehr schlechte Oberflächen aus. Zirkonoxid (der Fa. Roth) ist nahezu genauso geeignet wie Ox50. Levasil hat sehr kleine, sehr gut stabilisierte SiO₂-Partikel, die aber so klein sind, dass diese in die Poren der Unterstruktur (ct 1200SG) gesaugt werden. Daher unterscheidet sich die Oberflächengüte dieser Probe kaum von der der nicht nachbeschichteten ct1200SG Oberfläche.

### Verbundkörper 2A bis 2H:

Es zeigte sich, dass sowohl hydrophil eingestellte Silanmischungen (Anteil an TEOS und GLYEO höher) als auch hydrophob eingestellte (Anteil MTES höher) glatte Beschichtungen ergeben. Einzig die Proben, welche mit einem erhöhten Anteil der Vernetzenden Komponente TEOS hergestellt wurden (TEOS-Anteil > 25 %), zeigten schlechtere Oberflächenqualitäten.

Die Ergebnisse scheinen im Wesentlichen unabhängig vom gewählten Partikelsystem zu sein, das heißt, dass im jeweiligen Partikelsystem die Tendenzen (nicht die absoluten Ergebnisse) gleich sind.

Kontaktwinkel nicht messbar (nm) erscheint in der Tabelle 3, wenn die Oberfläche so hydrophil ist, dass ein Wassertropfen aufgesaugt wird.

### Verbundkörper 2I und 2K:

Die Herstellung von Mischungen mit Aminosilanen ist in der beschriebenen Form nicht möglich. Um diese Proben herstellen zu können, muss in das Gefäß, in dem bereits die Partikeldispersion gerührt wird, das Silangemisch, ohne Vorhydrolyse, gegeben und dort hydrolysiert werden (Eintopfverfahren). Andernfalls würde das Vorhydrolysat fest werden (Vergelen).

Ein Austausch der haftvermittelnden Komponente GLYEO gegen AMEO ist prinzipiell möglich. Insbesondere können dadurch (und durch den sich einstellenden veränderten pH-Wert) andere Partikelsysteme wie z.B. P25 gut eingesetzt werden.

Verschiedene Alkylsilane (IBTEO) führen im Gegensatz zum MTES zu einer verstärkten Neigung zur Agglomerat-Bildung. Dies führt dann zu sehr unebenen Oberflächen.

**Tabelle 3: Ergebnisse der Charakterisierung der in den Beispielen und im Vergleichsbeispiel hergestellten Verbundkörper**

| Verbundkörper | Rdq min. | Rdq max. | SDQ | Kontaktwinkel | Flächengewicht | Dicke | Zugfestigkeit Maschinenrichtung | Zugfestigkeit, Quer | MFP | GurleyZahl |
|---|---|---|---|---|---|---|---|---|---|---|
| A | 5,5 | 52,5 | 18,9 | 88 | 215 | 118 | > 50 | 37 | 0,27 | 340 |
| B | 7,1 | 42,4 | 34,7 | 73 | 163 | 120 | 49,1 | 20 | 0,31 | 110 |
| C | 5,1 | 9,0 | 10,5 | 80 | 211 | 125 | > 50 | > 50 | -- | 290 |
| D | 7,2 | 17,2 | 18,0 | 82 | 307 | 256 | > 50 | 40 | 0,38 | 580 |
| E | 7,8 | 58,6 | 21 | 125 | 230 | 157 | >50 | 40 | 0,32 | 190 |
| F | 3,9 | 66,0 | 45,2 | 54 | 279 | 172 | >50 | 43 | 3,7 | 1100 |
| G | 6,6 | 10,8 | 12,9 | 84 | 238 | 141 | 47 | 36 | 0,38 | 340 |
| H | 12,4 | 32,4 | 28,2 | 7 | 254 | 225 | 48 | 36 | 0,77 | 110 |
| I | 9,6 | 16,8 | 18,4 | -- | 285 | 174 | 49 | 34 | 0,45 | 250 |
| J | 3,5 | 8,7 | 8,0 | -- | 208 | 146 | 47 | 43 | 0,18 | 1010 |
| K | 3,6 | 6,9 | 7,8 | -- | 218 | 142 | 43 | 43 | 0,11 | 900 |
| L | 5,2 | 9,5 | 11,0 | 8,17 | 245 | 138 | >50 | 37 | 0,11 | 500 |
| N | 5,4 | 16,0 | 11,0 | 8,02 | 206 | 147 | >50 | 36 | 0,11 | 550 |
| O | 4,2 | 9,8 | 8,4 | 75,74 | 206 | 139 | >50 | 38 | 0,12 | 440 |
| P | 3,3 | 5,4 | 6,5 | -- | 205 | 135 | >50 | 40 | 0,12 | 550 |
| Q | 3,7 | 15,0 | 9,7 | 40,1 | 209 | 142 | >50 | 33 | 0,13 | 720 |
| R | 3,4 | 8,5 | 7,5 | -- | 209 | 144 | >50 | 30 | 0,11 | 740 |
| S | 12,0 | 52,0 | 40,0 | 35,55 | 211 | 148 | >50 | 39 | 0,26 | 400 |
| T | 13,0 | 59,0 | 57,0 | 26,21 | 209 | 147 | >50 | 32 | 0,26 | 470 |
| U | 5,3 | 21,0 | 15,0 | 15,43 | 209 | 141 | >50 | 37 | 0,22 | 520 |
| V | 67,0 | 79,0 | 82,0 | -- | 210 | 154 | >50 | 33 | 0,30 | 640 |
| W | 5,7 | 15,0 | 13,0 | 11,48 | 208 | 140 | >50 | 26 | 0,12 | 540 |
| X | 5,8 | 45,0 | 16,0 | 20,35 | 206 | 136 | >50 | 38 | 0,29 | 1600 |
| 2A | 3,4 | 8,5 | 7,5 | -- | 209 | 144 | >50 | 30 | 0,11 | 740 |
| 2G | 5,6 | 22,0 | 14,0 | 74,7 | 209 | 153 | 50 | 46 | 0,14 | 560 |
| 2H | 5,2 | 9,5 | 11,0 | 79,99 | 243 | 138 | 48 | 30 | 0,12 | 440 |
| 2B | 6,1 | 31, | 18,0 | 52,09 | 223 | 167 | >50 | 42 | 0,10 | 750 |
| 2C | 6,6 | 12,0 | 17,0 | -- | 227 | 170 | >50 | 31 | 0,20 | 750 |
| 2D | 4,5 | 12,0 | 12,0 | -- | 251 | 146 | 49 | 34 | 0,12 | 710 |
| 2H | 4,5 | 12,0 | 13,0 | 63,44 | 196 | 128 | >50 | 28 | 0,087 | 710 |
| 2E | 3,7 | 15,0 | 11,0 | -- | 242 | 141 | >50 | 31 | 0,12 | 610 |
| 2F | 12,0 | 52,0 | 40,0 | 120,13 | 249 | 155 | >50 | 36 | 0,26 | 460 |
| 21 | 5,4 | 8,4 | 7,8 | 43,17 | 206 | 145 | 49 | 40 | 0,11 | 470 |
| 2K | 6,0 | 13,9 | 10,7 | 106,8 | 209 | 148 | >50 | 32 | 0,10 | 550 |

| | | | | | | | | | | |
|---|---|---|---|---|---|---|---|---|---|---|
| -- = nicht messbar | | | | | | | | | | |

### Beispiel 3: Kontinuierliches Verfahren zur Herstellung eines Verbundkörpers

Zur Herstellung eines erfindungsgemäßen Verbundkörpers (analog A) in einem kontinuierlichen Beschichtungsverfahren auf einer entsprechenden Fertigungsanlage, wie diese beispielsweise von der Fa. Matthis gefertigt werden, die aus einer Support-Abwicklung, einer Beschichtungseinheit, einer Trocknung und einer Aufwicklung mit Zugspannungskontrolle besteht, wurde die Beschichtungsmasse BM-I-a in einer ca. 125 fach vergrößerten Ansatzmenge in einem gerührten 70L-Edelstahl-Gefäß wie oben beschrieben hergestellt. Diese wurde dann im DipCoat-Verfahren unter Beibehalten einer Zugspannung von > 1N/cm Warenbahnbreite auf einem Polyester-Vlies-Support (Vlies 05-TH-60W) mit einer Breite von ca. 30 cm und bis zu 500 Metern Länge beschichtet, wobei es auch zu einem Durchtränken des Supports kam. Dieserwurde ca. 50 cm nach dem DipCoat in einen 5 m langen Umluftofen eingebracht, in dem der Verbundwerkstoff bei 140 °C getrocknet wurde. Die Warenbahngeschwindigkeit betrug 1,5 m/min.

Nach dem Trocknen der Warenbahn wurde diese bei der gegebenen Zugspannung aufgewickelt und anschießend in einem erneuten Beschichtungsvorgang ein zweites Mal unter Beibehaltung aller Verfahrensparameter behandelt. Der resultierende Verbundkörper K-VK-1 (analog zu Verbundkörper A) wird durch die in Tabelle 4 angegebenen Parameter beschrieben.

### a) Hydrophiler Verbundkörper

Dieser Verbundkörper K-VK-1 wurde nachfolgend mit einer im ca. 10 fach vergrößertem Maßstab hergestellten Beschichtungsmasse BM-II-e in der unter gleichen Maschinenparametern betriebenen gleichen Anlage zweimal beschichtet. Der resultierende kontinuierlich hergestellte Verbundkörper K-VK-2 (analog zu Verbundkörper R) wird durch die in Tabelle 4 angegebenen Parameter beschrieben.

### b) Hydrophober Verbundkörper

Der Verbundkörper K-VK-1 wurde nachfolgend mit einer im ca. 10 fach vergrößertem Maßstab hergestellten Beschichtungsmasse BM-II-x in der unter gleichen Maschinenparametern betriebenen gleichen Anlage zweimal beschichtet. Der resultierende kontinuierlich hergestellte Verbundkörper K-VK-3 (analog zu Verbundkörper 2H) wird durch die in Tabelle 4 angegebenen Parameter beschrieben.

**Tabelle 4: Parameter zu den in Beispiel 3 hergestellten Verbundkörpern**

| Verbundkörper | Rdq min. | Rdq max. | SDQ | Kontaktwinkel | Flächengewicht | Dicke | Zugfestigkeit Maschinenrichtung | Zugfestigkeit Quer | MFP [µm] | GurleyZahl |
|---|---|---|---|---|---|---|---|---|---|---|
| K-VK-1 | 6,7 | 19,3 | 14,3 | 85 | 185 | 138 | > 50 | 34 | 0,25 | 350 |
| K-VK-2 | 4,5 | 13,5 | 11,6 | 24 | 212 | 144 | >50 | 30 | 0,11 | 740 |
| K-VK-3 | 3,3 | 5,4 | 6,5 | 89 | 197 | 141 | > 50 | 38 | 0,09 | 800 |

### Beispiel 4: Verbundkörper mit einer Polysiloxan enthaltenden Polymerschicht a) Herstellung einer Polymerlösung (PL-1)

Es wurden 10 g der Komponente A (RTV-615A) in 90 g Hexamethyldisiloxan in einem Rundkolben vorgelegt und auf 60 °C erwärmt. Nach Erreichen der vorgegebenen Temperatur wurde 1 g Komponente B (RTV-615B) in 10 g Hexamethyldisiloxan zugegeben. Die sich unter diesen Bedingungen sehr gut mischenden Komponenten ließ man nach 2 h Rührdauer abkühlen und kontrollierte nach Verdünnung mit Hexamethyldisiloxan auf einen Gehalt von 92 Gew-% an Hexamethyldisiloxan in der Lösung die Viskosität. Diese betrug zunächst 13 mPas und veränderte sich mit der Zeit und stieg kontinuierlich an. Die Verarbeitung dieser Lösung und die Beschichtung des Verbundkörpers erfolgte, solange die Viskosität im Bereich von 5 bis 50 mPas liegt. Die Viskositäten wurden mit einem Rotationsviskosimeter der Fa. Malvern Instruments limited, Wocestershire, UK Typ Kinexus KNX2112 bei einer Scherrate von 100 s⁻¹ und einer Temperatur von 25 °C bestimmt. Die Topfzeit des idealen Verarbeitungsfensters liegt bei ca. 2 Stunden.

### b) Herstellung einer Polymerlösung (PL-2)

Die Lösung wurde erhalten durch Zusammengeben von Lösung A und Lösung B im (Gewichts-)Verhältnis 1:1. Dabei enthielt Lösung A 99,8 Gew.-% der Vinyldimethylpolysiloxan-VinylQM-Harzmischung VQM 906 und 0,2 Gew.-% Katalysator 511. Lösung B enthielt 52,99 Gew.-% des vinylfunktionellen Polydimethylsiloxans VS 165.000, 38,99 Gew.-% des SiH-haltigen Polydimethylsiloxans Crosslinker-120, 8 Gew.-% der Vinyldimethylpolysiloxan-VinylQM-Harzmischung VQM 906 sowie 0,02 Gew.-% des Inhibitors Methylbutinol. Diese Mischung wurde direkt vor der Verwendung mit Hexamethyldisiloxan verdünnt, so dass die eingesetzte Lösung einen Gehalt an Hexamethyldisiloxan von 85 Gew.-% und eine Viskosität von 9 mPas aufwies. Diese wurde mit einem Rotationsviskosimeter der Fa. Malvern Instruments limited, Wocestershire, UK Typ Kinexus KNX2112 bei einer Scherrate von 100 s⁻¹ und einer Temperatur von 25 °C bestimmt.

### c) Herstellung einer Polymerlösung (PL-3)

Es wurden 10 g der Komponente A (RTV-615A) in 90 g Hexamethyldisiloxan in einem Rundkolben vorgelegt und auf 60 °C erwärmt. Nach Erreichen der vorgegebenen Temperatur wurden 1 g Komponente B (RTV-615B) in 10 g Hexamethyldisiloxan zugegeben. Die sich unter diesen Bedingungen sehr gut mischenden Komponenten ließ man nach 2h Rührdauer abkühlen und kontrollierte nach Verdünnung auf einen Gehalt von 95 Gew-% an Hexamethyldisiloxan in der Lösung die Viskosität. Diese lag zunächst bei 6 mPas und veränderte sich mit der Zeit und stieg kontinuierlich an. Die Verarbeitung dieser Lösung und die Beschichtung des Verbundkörpers erfolgte, solange die Viskosität im Bereich von 5 bis 50 mPas liegt. Diese wurde mit einem Rotationsviskosimeter der Fa. Malvern Instruments limited, Wocestershire, UK Typ Kinexus KNX2112 bei einer Scherrate von 100 s⁻¹ und einer Temperatur von 25 °C bestimmt. Die Topfzeit des idealen Verarbeitungsfensters liegt bei ca. 2 Stunden.

### d) Herstellung einer Polymerlösung (PL-4)

Eine wie unter a) hergestellte Lösung wurde mit Hexamethyldisiloxan auf 95 Gew.-% an statt auf 92 Gew.-% Hexamethyldisiloxan verdünnt. Nach Homogenisierung für 2 Stunden wurde diese für die Beschichtung verwendet.

### e) Beschichtung eines Verbundkörper mit Polymeren

Ein Verbundkörper wurde in einem Trockenschrank bei 100 °C für mindestens 2 h vorgetrocknet, anschließend im DipCoat-Verfahren, wie bereits in Beispiel 1f beschrieben, beschichtet. Dazu wurde eine automatisierte Filmziehvorrichtung der Fa. Zehntner so modifiziert, dass diese mit einem Seilzugmechanismus die zu beschichtenden Bahnwaren mit einer vorgegebenen Geschwindigkeit von 42 mm/s senkrecht aus einer DipCoat Vorrichtung, in der eine Seite der Warenbahn über eine Walze umgelenkt wird und somit nicht mit der Beschichtungslösung in Kontakt kommt und die andere Seite der Warenbahn durch eine mit der Lösung gefüllte Wanne gefördert wird, nach oben gezogen wird.

Zur Beschichtung wurde die fertig gemischte Lösung in eine Wanne gegeben, in der eine mit der Warenbahn umspannte Rolle lief. Der Füllstand der Wanne wurde so eingestellt, dass die Rolle nur mit 45 ° seines Umfangs in die Lösung eintaucht. Zur guten Führung der Warenbahn, und um ein Hinterlaufen der Warenbahn durch die Lösung zu verhindern, betrug die Bahnspannung ca. 0,1 N/cm Warenbahnbreite. Die Warenbahn wurde mit einer Geschwindigkeit von 42 mm/s bei Raumtemperatur und Normaldruck durch die Lösung geführt. Nachdem die Beschichtung abgeschlossen war verblieb die Warenbahn noch 15 Minuten hängend bei Raumtemperatur in der Apparatur damit das Lösemittel weitgehend verdunsten konnte.

Erst nach einer Trocknung der Warenbahn bei 120 °C über Nacht in einem Trockenschrank wurde diese charakterisiert. Eine Zusammenstellung der verwendeten Verbundkörper und Beschichtungslösungen findet sich in Tabelle 6.

Die verschiedenen Verbundwerkstoffe wurden teilweise anstatt bei 100 °C vorgetrocknet zu werden mit einer Corona behandelt. Dazu wurde der Verbundkörper mit der Vorderseite nach oben auf einem elektrisch nicht leitenden Material, PET-Vlies, Fa. Sojitz, 05-TH-60W befestigt und durch eine Corona Behandlungsanlage (Fa. Softal, Hamburg) mit einer Geschwindigkeit von 1,5 m/min gefördert. Die Leistung der Corona-Behandlung kann variabel angepasst werden. Die Versuchseinstellung sind ebenfalls der Tabelle 6 zu entnehmen.

Alle Verbundkörper wurden durch Bestimmung (erfolgte wie oben ausgeführt) der Reingasselektivität für CO₂ / CH₄ und des Flusses von CO₂ charakterisiert um den Nachweis der fehlerfreien Beschichtung mit der Polymerlösung zu führen. Die Ergebnisse sind in Tabelle 6 angegeben.

**Tabelle 6: Versuchsparameter und Ergebnisse aus Beispiel 4e.**

| Resultierender Verbundkörper | Eingesetzter Verbundkörper | Genutzte Lösung | Corona-Leistung [W min / m] | ReingasSelektivität CO₂/CH₄ | Fluss CO₂ [GPU] |
|---|---|---|---|---|---|
| P-VK-1 | K-VK-3 | PL-1 | 600 | 3 | 730 |
| P-VK-2 | K-VK-3 | PL-2 | 600 | 3 | 820 |
| P-VK-3 | K-VK-3 | PL-3 | 600 | 3 | 940 |

Die Verbundkörper P-VK-1 bis P-VK-3 zeichnen sich durch eine recht gute Toleranz gegenüber der Handhabung der Verbundkörper aus. Dies reduziert die Wahrscheinlichkeit des Auftretens von Fehlern oder Beschädigungen am oder im Verbundkörper, die während des Einbringens in eine Apparatur zur Abtrennung von Lösemittelen auftreten können. Typische Fehler oder Beschädigungen wären Brüche in der Keramik aufgrund von Knicken oder der Behandlung mit spitzen Gegenständen.

Alle Verbundkörpern P-VK-1 bis P-VK-3 sind flexibel und können ohne Beschädigung um einen Stab oder um ein Rohr mit einem Durchmesser von bis herab zu 15 mm gewickelt werden. Die Verbundkörper P-VK-1 bis P-VK-3 können auf minimale Durchmesser von bis herab zu 5 mm ohne Beschädigung gewickelt werden. Die Beschädigungsfreiheit der entsprechenden Verbundkörper kann leicht durch die Bestimmung der Reingasselektivität, welche vor und nach der Behandlung gleich ist, nachgewiesen werden. Hierbei wird eine Reduzierung der Reingasselektivität um 2 Einheiten als "Defekt im Verbundkörper" gewertet.

Durch die Flexibilität der Verbundkörper sind diese sehr einfach in typischen Modulformen für Flachmembranen einbringbar und eignen sich insbesondere zur Verwendung in Spiral-Wickel-Modulen, Plate und Frame Modulen, Taschenmodulen und andere Apparaturen, die für Flachmembranen entworfen wurden.

### Beispiel 5: Ausprüfung der Verbundkörper mit einer Polysiloxan enthaltenden Polymerschicht

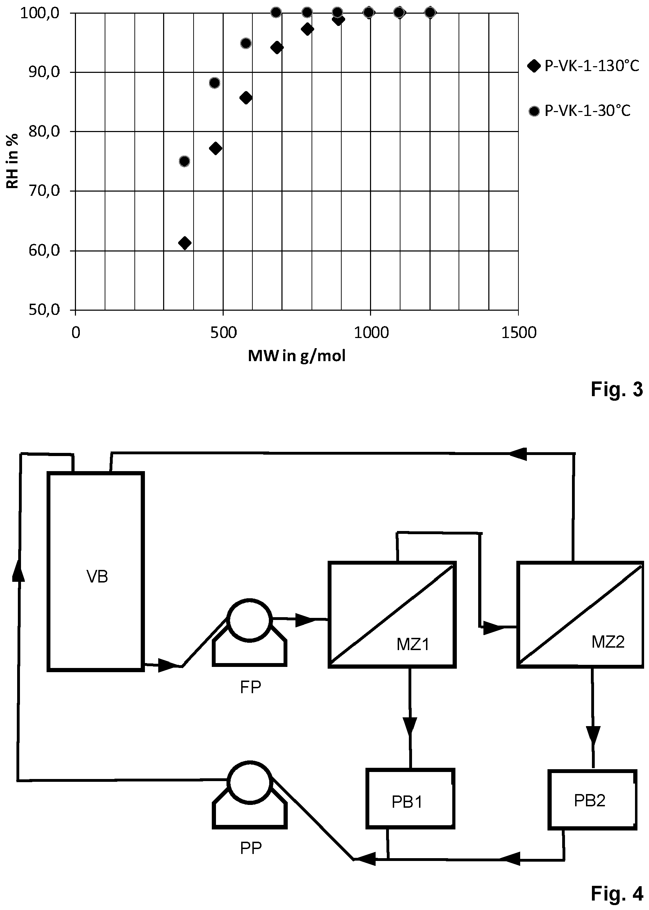

Zur weiteren Charakterisierung wurden einige der Membranen durch die sogenannte MWCO (Molecular-Weight-Cut-Off-)-Methode in Toluol untersucht. Diese Methode ist unter anderem in WO 2011/067054 A1, aber auch in Journal of Membrane Science 291 (2007) 120-125, beschrieben. Hierzu wurden die Membranen in einer Querstromfiltration mit Toluol als Lösemittel, in dem Polystyrole unterschiedlicher Molekulargewichte mit einer Gesamtkonzentration von 1g / L gelöst sind, getestet. Der prinzipielle Aufbau dieser Apparatur ist in Fig. 4 dargestellt. Es wurde über einen Zeitraum von 3 Stunden die Permeatflüsse (Toluol) verfolgt und gravimetrisch quantifiziert. Nach drei Stunden wurde ein Teil des zuletzt gesammelten Permeates entnommen und für die Molekulargewichtsbestimmung, die über ein HPLC-System erfolgte, in einer separaten Probenflasche gesammelt.

Die Testung erfolgte in der Querstromfiltrationsapparatur, sofern nichts anderes angegeben ist, bei 30 bar (3,0 MPa) Transmembrandruck (TMP) und bei einer Temperatur von 30°C, wobei der Permeatstrom kontinuierlich über eine Pumpe in das Vorlagegefäß zurückgepumpt wurde. Die Membranzellen, die im Rahmen dieser Versuche genutzt wurden, waren von Evonik Membrane Extraction Technologies bezogen worden.

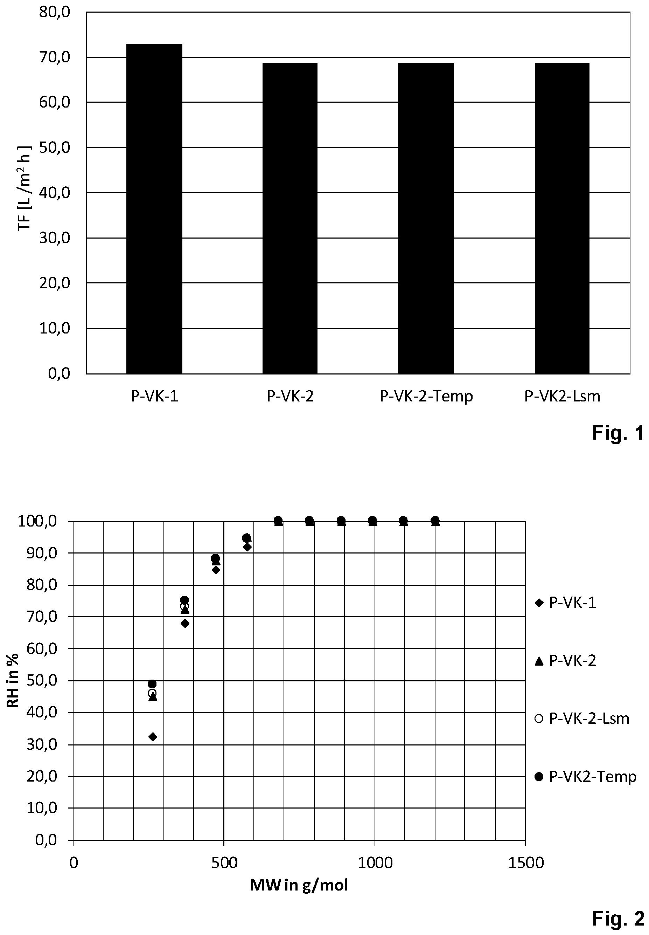

In Tabelle 7 sind als Ergebnisse dieser Austestung die Molekulargewichte angegeben, bei denen ein 90 %-iger Rückhalt erreicht wird. Die getesteten Membranen wurden teilweise Vorbehandlungen unterzogen (Beispiele 5a und 5b). Nachfolgend sowie in den Figuren 1 bis 3 und Tabelle 7 sind die Ergebnisse dieser Testungen dargestellt.

### a) Temperaturbeständigkeit

Einige der in Beispiel 4e erhaltenen Verbundkörper wurden für 72 Stunden bei 150 °C im Trockenschrank gelagert (Verbundkörper: P-VK-1-Temp). Danach wurden die Charakterisierungen der Membraneigenschaften wiederholt. Weder Fluss noch Rückhalt zeigten signifikante Änderungen gegenüber der nicht Temperatur behandelten Verbundkörper.

### b) Lösemittelbeständigkeit

Die in Beispiel 4e erhaltenen Verbundkörper wurden für 72 Stunden bei 150 °C in Mesitylen gelagert (Verbundkörper: P-VK-1-Lsm). Danach wurden die Charakterisierungen der Membraneigenschaften wiederholt. Weder Fluss noch Rückhalt zeigten signifikante Änderungen gegenüber den Ergebnissen der unbehandelten Verbundkörper.

### c) Separationseigenschaften bei erhöhter Temperatur

Die in Beispiel 4e erhaltenen Verbundkörper wurden bei 30 bar (3,0 MPa) Transmembrandruck bei erhöhter Temperatur eingesetzt. Hierbei änderte sich der Fluss deutlich und der Rückhalt veränderte sich nur geringfügig. Im Folgenden sind die Ergebnisse der Messungen dargestellt, wobei das Muster P-VK-1-130°C bei einer Temperatur von 130°C auf das Permeationsverhalten für Toluol und den Rückhalt für Polystyrol untersucht wurde und das Muster P-VK-1-30°C die Vergleichswerte eines Musterstücks sind, welches bei 30°C untersucht wurde. Die Untersuchungen erfolgten immer über einen Zeitraum von drei Stunden und bei einem Permeatdruck von 5 bar (0,5 MPa), wobei der Fluss nach drei Stunden festgehalten wurde. Die Ergebnisse des Verlaufs der Rückhalte sind Fig. 3 zu entnehmen. Die Ergebnisse der Bestimmung des Toluol-Flusses und des Rückhalts ist Tabelle 7 zu entnehmen.

**Tabelle 7: Ergebnisse zur Bestimmung des Toluol-Flusses und des Rückhalts**

| Verbundkörper | MWCO (90%) | Fluss [L / m² h] bei 3,0 MPa TMP | Temperatur |
|---|---|---|---|
| P-VK-1 | ca. 500 | 72 | 30 |
| P-VK-1 | ca. 625 | 312 | 130 |
| P-VK-3 | ca. 650 | 410 | 130 |

Die Ergebnisse der Figuren 1 bis 3 sowie der Tabelle 7 zeigen, dass durch die keramische Struktur der Verbundkörper P-VK-1 bis P-VK3 diese bei einer Druckbeaufschlagung bei erhöhter Temperatur ihre Dicke und Porosität nahezu nicht verändern. Dieses ist entscheidend dafür, dass der gesamte erfindungsgemäße Verbundkörper auch bei einer hohen Druckbeaufschlagung bei erhöhter Temperatur einen nahezu konstanten Toluol-Fluss aufweist und der Fluss nicht bei höheren Drücken durch eine sich verdichtende poröse Struktur reduziert wird.

## Patentansprüche

1. Verbundkörper, der auf einem porösen Substrat und in den Zwischenräumen des Substrats, welches Fasern, vorzugsweise aus einem elektrisch nicht leitendem Material, aufweist, eine poröse Schicht (1) aus miteinander und teilweise mit dem Substrat verbundenen Oxidpartikeln, die zumindest ein Oxid, ausgewählt aus Oxiden der Elemente Al, Zr, Ti und Si, bevorzugt ausgewählt aus Al₂O₃, ZrO₂, TiO₂ und SiO₂ aufweisen, aufweist, zumindest auf einer Seite eine weitere poröse Schicht (2) aufweist, die miteinander und teilweise mit der Schicht (1) verbundene Oxidpartikel, die zumindest ein Oxid, ausgewählt aus Oxiden der Elemente Al, Zr, Ti und Si, bevorzugt ausgewählt aus Al₂O₃, ZrO₂, TiO₂ und SiO₂ aufweisen, aufweist,
wobei die in der Schicht (1) vorhandenen Oxidpartikel eine größere mittlere Partikelgröße aufweisen als die in der Schicht (2) vorhandenen Oxidpartikel, und wobei die mittlere Partikelgröße (d50) der Oxidpartikel in der Schicht (1), bestimmt wie in der Beschreibung angegeben, von 0,5 bis 4 µm beträgt und die mittlere Partikelgröße (d50) der Oxidpartikel in der Schicht (2), bestimmt wie in der Beschreibung angegeben, von 0,015 bis 0,15 µm, bevorzugt 0,04 bis 0,06 µm beträgt,
**dadurch gekennzeichnet, dass** auf oder oberhalb der Schicht (2) eine Polymerbeschichtung (PB) vorhanden ist, die ein oder mehrere Polysiloxane enthält.

2. Verbundkörper nach Anspruch 1,
**dadurch gekennzeichnet,**
**dass** der Verbundkörper einen Toluol-Fluss bei 130 °C und 30 bar (3,0 MPa) Transmembrandruck, bestimmt wie in der Beschreibung angegeben, von größer 130 L/m²h, bevorzugt größer 250 L/m²h, besonders bevorzugt größer 300 L/m²h und ganz besonders bevorzugt größer 400 L/m²h, aufweist.

3. Verbundkörper nach Anspruch 1 oder 2,
**dadurch gekennzeichnet,**
**dass** der Verbundkörper eine Dicke von 100 bis 400 µm, bevorzugt 125 bis 200 µm und besonders bevorzugt von 130 bis 170 µm aufweist

4. Verbundkörper nach zumindest einem der Ansprüche 1 bis 3,
**dadurch gekennzeichnet,**
**dass** das Substrat ein Vlies, Gewirke oder Gelege, bevorzugt ein Vlies oder Gelege, besonders bevorzugt ein Vlies ist.

5. Verbundkörper nach zumindest einem der Ansprüche 1 bis 4,
**dadurch gekennzeichnet,**
**dass** die Fasern eine Dimension von 1 bis 200 g/km Faser aufweisen und bevorzugt aus Polyacrylnitril, Polyamid, Polyester und/oder Polyolefin sind.

6. Verbundkörper nach zumindest einem der Ansprüche 1 bis 5,
**dadurch gekennzeichnet,**
**dass** das Substrat eine Dicke von 50 bis 150 µm, bevorzugt 100 bis 130 µm und ein Flächengewicht von 40 bis 150 g/m², bevorzugt 50 bis 120 g/m², bevorzugt 50 bis 100 g/m² und ganz besonders bevorzugt 60 g/m² aufweist.

7. Verbundkörper nach zumindest einem der Ansprüche 1 bis 6,
**dadurch gekennzeichnet,**
**dass** der Verbundkörper eine mittlere Porenweite von 60 bis 140, bevorzugt 75 bis 130 nm, aufweist.

8. Verbundkörper nach zumindest einem der Ansprüche 1 bis 7,
**dadurch gekennzeichnet,**
**dass** der Verbundkörper auf der Oberfläche der Schicht (2) eine Oberflächenrauhigkeit Sdq, bestimmt wie in der Beschreibung angegeben, von kleiner 10 µm, besonders bevorzugt von weniger als 8 µm aufweist.

9. Verfahren zur Herstellung eines Verbundkörpers, bevorzugt gemäß zumindest einem der Ansprüche 1 bis 18,
**dadurch gekennzeichnet, dass** es die folgenden Schritte aufweist:
(a) Aufbringen einer Beschichtungsmasse (BM1) auf und in ein Substrat, welches Fasern und Zwischenräume zwischen den Fasern aufweist, wobei die Beschichtungsmasse hergestellt wird durch Vereinen
(a1) einer Dispersion (D1) von Oxidpartikeln, hergestellt durch Mischen von Oxidpartikeln, ausgewählt aus den Oxiden der Elemente Ti, Al, Zr und/oder Si, die einen mittleren Partikeldurchmesser (d50) von 0,5 bis 4 µm aufweisen, mit Wasser, einer anorganischen Säure, vorzugsweise Salpetersäure, und einem Dispergierhilfsmittel,
(a2) einer Dispersion (D2) von Oxidpartikeln, hergestellt durch Mischen von Oxidpartikeln, ausgewählt aus den Oxiden der Elemente Ti, Al, Zr und/oder Si, die einen mittleren Partikeldurchmesser (d50) von 15 bis 150 nm, vorzugsweise 40 bis 60 nm aufweisen, mit Wasser,
(a3) einer Binderformulierung (BF1), hergestellt durch Mischen von mindestens zwei organofunktionellen Silanen mit einem Alkanol, vorzugsweise Ethanol, einer anorganischen Säure, vorzugsweise Borsäure, und Wasser,
(b) Verfestigen der Beschichtungsmasse (BM1) bei einer Temperatur von 100 °C bis 275 °C, vorzugsweise 120 bis 240 °C, um eine erste Schicht (S1') zu schaffen,
(c) optional Aufbringen einer Beschichtungsmasse (BM2) auf mindestens die Schicht (S1'), wobei die Beschichtungsmasse (BM2) hergestellt wird durch Vereinen
(c1) einer Dispersion (D3) von Oxidpartikeln, hergestellt durch Mischen von Oxidpartikeln, ausgewählt aus den Oxiden der Elemente Ti, Al, Zr und/oder Si, die einen mittleren Partikeldurchmesser (d50) von 0,5 bis 4 µm aufweisen, mit Wasser, einer anorganischen Säure, vorzugsweise Salpetersäure, und einem Dispergierhilfsmittel,
(c2) einer Dispersion (D4) von Oxidpartikeln, hergestellt durch Mischen von Oxidpartikeln, ausgewählt aus den Oxiden der Elemente Ti, Al, Zr und/oder Si, die einen mittleren Partikeldurchmesser (d50) von 15 bis 150 nm, bevorzugt 40 bis 60 nm aufweisen, mit Wasser,
(c3) einer Binderformulierung (BF2), hergestellt durch Mischen von mindestens zwei organofunktionellen Silanen mit einem Alkanol, vorzugsweise Ethanol, einer anorganischen Säure, vorzugsweise Borsäure, und Wasser,
(d) optional Verfestigen der Beschichtungsmasse (BM2) bei einer Temperatur von 100 °C bis 275 °C, vorzugsweise 120 bis 240 °C, um eine zweite Schicht (S2') zu schaffen,
(e) Aufbringen einer Beschichtungsmasse (BM3) auf die Schicht (S1') oder, falls vorhanden, die Schicht (S2'), wobei die Beschichtungsmasse (BM3) hergestellt wurde durch Vereinigen von Wasser und einer anorganischen Säure mit einer
(e1) Oxidpartikel, ausgewählt aus den Oxiden der Elemente Ti, Al, Zr und/oder Si, die einen mittleren Partikeldurchmesser (d50) von 15 bis 150 nm, bevorzugt 40 bis 60 nm, aufweisen, aufweisenden wässrigen Dispersion (D5), sowie mit Ethanol und mit einer
(e2) Binderformulierung (BF3), die mindestens zwei organofunktionelle Silane umfasst,
(f) Verfestigen der Beschichtungsmasse bei einer Temperatur von 100 °C bis 275 °C, vorzugsweise 120 bis 240 °C, um eine Schicht (S3') zu schaffen,
(g) optional Aufbringen einer Beschichtungsmasse (BM4) auf die Schicht (S3'), wobei die Beschichtungsmasse (BM4) hergestellt wurde durch Vereinigen von Wasser und einer anorganischen Säure mit einer
(g1) Oxidpartikel, ausgewählt aus den Oxiden der Elemente Ti, Al, Zr und/oder Si, die einen mittleren Partikeldurchmesser von 15 bis 150 nm, bevorzugt 40 bis 60 nm aufweisen, aufweisenden wässrigen Dispersion (D6), sowie mit Ethanol und mit einer
(g2) Binderformulierung (BF4), die mindestens zwei organofunktionelle Silane umfasst,
(h) optional Verfestigen der Beschichtungsmasse bei einer Temperatur von 100 °C bis 275 °C, vorzugsweise 120 bis 240 °C, um eine Schicht (S4') zu schaffen, und
(i) Aufbringen einer Polymerbeschichtung, die Polysiloxane enthält, auf die Schicht (S3') oder, falls vorhanden, auf die Schicht (S4').

10. Verfahren nach Anspruch 9,
**dadurch gekennzeichnet,**
**dass** als organofunktionelle Silane 3-Glycidyloxytriethoxysilan, Methytriethoxysilan und Tetraethoxysilan eingesetzt werden.

11. Verfahren nach Anspruch 9 oder 10,
**dadurch gekennzeichnet,**
**dass** in Binderformulierung (BF1) und (BF2) 3-Glycidyloxytriethoxysilan, Methytriethoxysilan und Tetraethoxysilan in einem Massenverhältnis von 2 bis 4 zu 0,5 bis 1,5 zu 1, besonders bevorzugt von 2,5 bis 3,5 zu 0,75 bis 1,25 zu 1, ganz besonders bevorzugt 3 zu 1 zu 1 eingesetzt werden.

12. Verfahren nach zumindest einem der Ansprüche 9 bis 11,
**dadurch gekennzeichnet,**
**dass** in Binderformulierung (BF3) und (BF4) 3-Glycidyloxytriethoxysilan, Methytriethoxysilan und Tetraethoxysilan in einem Massenverhältnis von 0,5 bis 1,5 zu 1,5 bis 2,5 zu 1, besonders bevorzugt von 0,75 bis 1,25 zu 1,75 bis 2,25 zu 1, ganz besonders bevorzugt 1 zu 2 zu 1 eingesetzt werden.

13. Verfahren nach zumindest einem der Ansprüche 9 bis 12,
**dadurch gekennzeichnet,**
**dass** die Beschichtungsmassen (BM3) und (BM4) identisch zusammengesetzt sind.

14. Verfahren nach zumindest einem der Ansprüche 9 bis 13,
**dadurch gekennzeichnet,**
**dass** die Beschichtungsmassen (BM1) und (BM2) identisch zusammengesetzt sind.

15. Verfahren nach zumindest einem der Ansprüche 9 bis 14,
**dadurch gekennzeichnet,**
**dass** als Substrat ein Polymervlies eingesetzt wird, das Fasern ausgewählt aus Polyacrylnitril, Polyester, Polyamid und/oder Polyolefin aufweist.

16. Verfahren nach zumindest einem der Ansprüche 9 bis 15,
**dadurch gekennzeichnet,**
**dass** das Verfestigen durch Durchlaufen eines Heißluft-Ofens, eines IR-Ofens oder eines sonstigen Ofens erfolgt.

17. Verwendung eines Verbundwerkstoffes gemäß zumindest einem der Ansprüche 1 bis 8 oder hergestellt gemäß einem der Ansprüche 9 bis 16 in der organophilen Nanofiltration, bevorzugt als organophile Nanofiltrationsmembran, besonders bevorzugt zur Abtrennung von organischen Verbindungen aus organische Lösemittel haltigen Stoffströmen.

18. Verwendung nach Anspruch 17, **dadurch gekennzeichnet, dass** die Abtrennung bei Temperaturen von größer 100 °C, bevorzugt größer 120 °C und besonders bevorzugt größer 150 °C durchgeführt wird.

19. Trennvorrichtung enthaltend einen Verbundwerkstoff gemäß zumindest einem der Ansprüche 1 bis 8 oder hergestellt gemäß einem der Ansprüche 9 bis 16.
